# EUROPEAN PATENT APPLICATION

(11) **EP 1 241 596 A2**
(43) Date of publication of application: **18.09.2002**
(21) Application number: 02251242.0
(22) Date of filing: 22.02.2002
(51) Int. Cl.: G06F 17/30

(54) **Customer relationship management system and method**

(30) Priority: 22.02.2001 US 270169 P; 17.12.2001 US 341203 P
(71) Applicant: Kanisa Inc., Cupertino, CA 95014 (US)
(72) Inventor: Angel, Mark. A, Napa, CA 95559-9733 (US); Kay, David. B, Los Gatos, CA 95033 (US)
(74) Representative: Beresford, Keith Denis Lewis

(57) **Abstract**

This document discusses, among other things, systems and methods for implementing at least partially automated customer relationship management (CRM) distributed across various enterprises or entities. Such entities may include an anchor or affinity enterprise vending a "whole product" to consumers, and various secondary or tenant enterprises vending components of the whole product. Such entities may also include a reseller or other value-adder as the affinity enterprise, and the product manufacturer as the secondary enterprise. By providing a distributed CRM content provider, documentation or other content can be substantially independently created, managed, and/or updated by the particular entity most capable of doing so. Autocontextualization of documents and/or user-provider dialog to concepts allows efficient and inexpensive content management. In addition to dialog-driven concept-organized content providers, other content providers include, among other things, web site documents or services, text search engines, discussion threads, and/or escalation to (or de-escalation from) an interface for interacting with a human customer service representative over a computer network or at the enterprise's CRM call center.

## Description

### CROSS-REFERENCE TO RELATED APPLICATIONS

This patent application claims the benefit of priority, under 35 U.S.C. Section 119(e), to Angel et al. U.S. Provisional Patent Application Serial Number 60/270,169, entitled A SYSTEM AND METHOD FOR PROVIDING A BUSINESS WEB SERVICE, filed February 22, 2001, and to Angel et al. U.S. Provisional Application Serial Number 60/341,203, entitled DISTRIBUTED CUSTOMER RELATIONSHIP MANAGEMENT SYSTEMS AND METHODS, filed December 17, 2001.

### FIELD OF THE INVENTION

This document relates generally to, among other things, computer-based content provider systems, devices, and methods and specifically, but not by way of limitation, to distributed customer relationship management (CRM) systems and methods.

### BACKGROUND

A computer network, such as the Internet or World Wide Web, typically serves to connect users to the information, content, or other resources that they seek. Web content, for example, varies widely both in type and subject matter. Examples of different content types include, without limitation: text documents; audio, visual, and/or multimedia data files. A particular content provider, which makes available a predetermined body of content to a plurality of users, must steer a member of its particular user population to relevant content within its body of content.

For example, in an automated customer relationship management (CRM) system, the user is typically a current or prospective customer of a product (i.e., a good and/or service) who has a specific question about a problem or other aspect of that product. Based on a query or other request from the user, the CRM system must find the appropriate technical instructions or other documentation to solve the user's problem. Using an automated CRM system to help customers is typically less expensive to a business enterprise than training and providing human applications engineers and other customer service personnel. According to one estimate, human customer service interactions presently cost between $15 and $60 per customer telephone call or e-mail inquiry. Automated Web-based interactions typically cost less than one tenth as much, even when accounting for the required up-front technology investment.

One ubiquitous navigation technique used by content providers is the Web search engine. A Web search engine typically searches for user-specified text, either within a document, or within separate metadata associated with the content. Language, however, is ambiguous. The same word in a user query can take on very different meanings in different context. Moreover, different words can be used to describe the same concept. These ambiguities inherently limit the ability of a search engine to discriminate against unwanted content. This increases the time that the user must spend in reviewing and filtering through the unwanted content returned by the search engine to reach any relevant content. As anyone who has used a search engine can relate, such manual user intervention can be very frustrating. User frustration can render the body of returned content useless even when it includes the sought-after content. When the user's inquiry is abandoned because excess irrelevant information is returned, or because insufficient relevant information is available, the content provider has failed to meet the particular user's needs. As a result, the user must resort to other techniques to get the desired content. For example, in a CRM application, the user may be forced to place a telephone call to an applications engineer or other customer service personnel.

An automated content provider system may include added intelligence that provides more effective navigation than a typical search engine. A particular enterprise's CRM system, however, typically must provide assistance relating to several different products. Each ofthese products may include several components. While these components may be produced by the same business enterprise, they are often produced by other enterprises. Moreover, components from such vendor enterprises may include subcomponents from still other vendor enterprises. Even if a product is substantially produced by a single enterprise, a reseller or another may customize or otherwise modify the product to add value. The information most relevant to a particular customer may relate to the whole product, to a particular component of the product, or to a particular enhancement made to the product. Such information may, therefore, come from any of several different sources, which may be outside the enterprise providing the CRM system that served as the customer's initial contact point. For high-technology products or other products having short life cycles, the enterprise hosting the CRM system that provides the customer's point-of-contact may not have access to the latest and most relevant content (e.g., software patches, etc.) sought by the customer. For today's complex products, the cost of generating the comprehensive information needed by customers is substantial-even though the cost of providing information to customers may be reduced by using an automated CRM content provider. Updating the information involves additional recurring costs. Moreover, customers frequently do not know (and may not care about) the exact source of their problem with the product. The choice of a particular business enterprise for initiating an automated CRM session, however, clearly indicates who the customer expects to solve his or her problem. For these and other reasons, the present inventors have recognized the existence of an unmet need to provide distributed CRM systems and techniques that provide users with content that may be generated and/or managed by different entities.

### SUMMARY

This document discusses, among other things, systems and methods for implementing at least partially automated customer relationship management (CRM) distributed across various enterprises or entities. In one example, such entities may include an anchor or affinity enterprise vending a "whole product" to consumers, and various secondary or tenant enterprises vending components of the whole product. In another example, such entities may also include a reseller or other value-adder as the affinity enterprise, and the product manufacturer as the secondary enterprise. By providing a distributed CRM content provider, documentation or other content can be substantially independently created, managed, and/or updated by the particular entity most capable of doing so. In one example, autocontextualization of documents and/or user-provider dialog to concepts allows efficient and inexpensive content management. In one example, in addition to dialog-driven concept-organized content providers, other content providers include, among other things, web site documents or services, text search engines, discussion threads, and/or escalation to (or de-escalation from) an interface for interacting with a human customer service representative over a computer network or at the enterprise's CRM call center. Other aspects of the disclosed embodiments will become apparent upon reading the following detailed description and viewing the drawings that form a part thereof.

### BRIEF DESCRIPTION OF THE DRAWINGS

In the drawings, which are not necessarily drawn to scale, like numerals describe substantially similar components throughout the several views. Like numerals having different letter suffixes represent different instances of substantially similar components. The drawings illustrate generally, by way of example, but not by way of limitation, various embodiments discussed in the present document.

Figure **1** is a block diagram illustrating generally one example of a content provider illustrating how a user is steered to content.

Figure **2** is an example of a knowledge map.

Figure **3** is a schematic diagram illustrating generally one example of portions of a document-type knowledge container.

Figure **4** is a block diagram illustrating generally an example of a distributed CRM content provider system, which allows content to be separately created or managed by different entities.

Figure **5** is a block diagram illustrating generally one example in which a user accesses an affinity enterprise's CRM content provider, which, in servicing that user, in turn contacts a secondary content provider.

Figure **6** is a block diagram illustrating generally, by way of example, but not by way of limitation, other types of connecting links available at a first entity's content provider.

Figure **7** is a block diagram illustrating generally an example of a dialog-driven concept-organized content provider including a "slave search link" input connector for being called by another entity's web site or other content provider.

Figure **8** is a block diagram illustrating generally one example of an "escalation link" connector and a "de-escalation link" connector.

Figure **9** is a block diagram illustrating generally one example of multiple distributed CRM systems, and in which a particular entity's content provider participates, if needed, in more than one distributed CRM system.

Figure **10** is a block diagram illustrating generally one example of a distributed CRM system organized as a "value chain" around a whole product.

Figure **11** is a block diagram illustrating generally one example of a distributed CRM system organized as a support alliance.

Figure **12** is a block diagram illustrating generally one example of a distributed CRM system organized as an aggregation of products provided through an aggregator enterprise.

Figure **13** is a block diagram illustrating generally one example of a distributed CRM system organized as a value chain.

### DETAILED DESCRIPTION

In the following detailed description, reference is made to the accompanying drawings which form a part hereof, and in which is shown by way of illustration specific embodiments in which the invention may be practiced. These embodiments are described in sufficient detail to enable those skilled in the art to practice the invention, and it is to be understood that the embodiments may be combined, or that other embodiments may be utilized and that structural, logical and electrical changes may be made without departing from the spirit and scope of the present invention. The following detailed description is, therefore, not to be taken in a limiting sense, and the scope of the present invention is defined by the appended claims and their equivalents. In this document, the terms "a" or "an" are used, as is common in patent documents, to include one or more than one. Furthermore, all publications, patents, and patent documents referred to in this document are incorporated by reference herein in their entirety, as though individually incorporated by reference. In the event of inconsistent usages between this documents and those documents so incorporated by reference, the usage in the incorporated reference(s) should be considered supplementary to that of this document; for irreconciliable inconsistencies, the usage in this document controls.

Some portions of the following detailed description are presented in terms of algorithms and symbolic representations of operations on data bits within a computer memory. These algorithmic descriptions and representations are the ways used by those skilled in the data processing arts to most effectively convey the substance of their work to others skilled in the art. An algorithm includes a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities. Unless specifically stated otherwise as apparent from the following discussions, terms such as "processing" or "computing" or "calculating" or "determining" or "displaying" or the like, refer to the action and processes of a computer system, or similar computing device, that manipulates and transforms data represented as physical (e.g., electronic) quantities within the computer system's registers and memories into other data similarly represented as physical quantities within the computer system memories or registers or other such information storage, transmission or display devices.

### Top-Level Example of A Content Provider

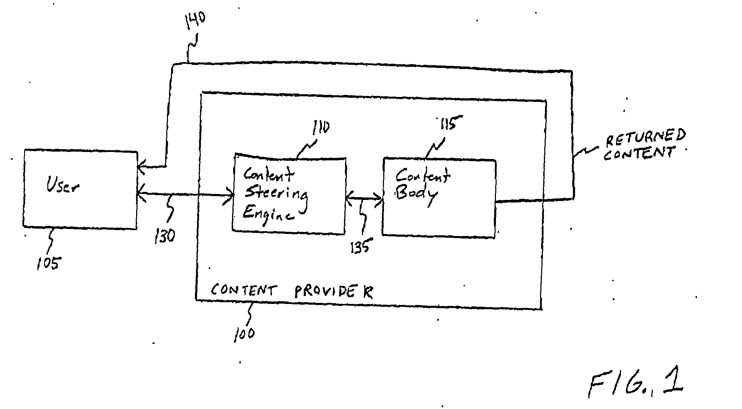

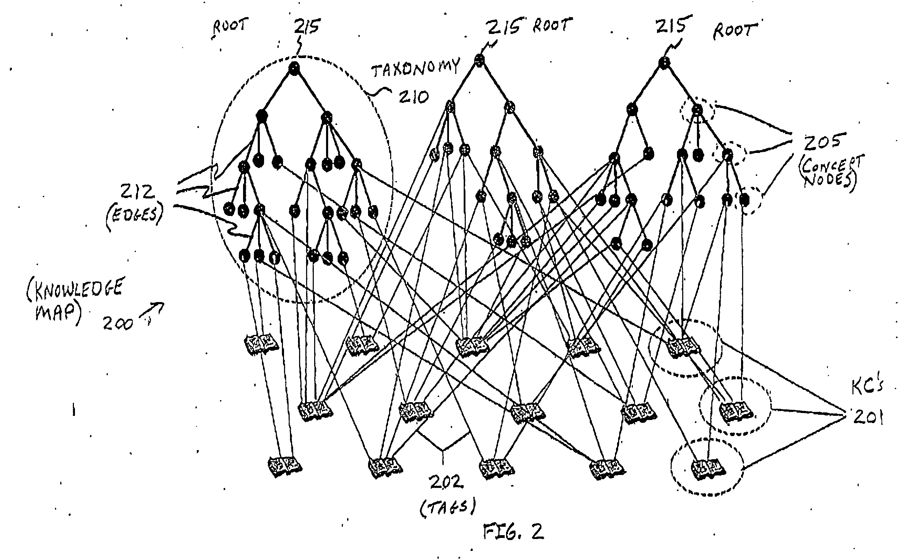

Figure **1** is a block diagram illustrating generally one example of a content provider **100** system illustrating generally how a user **105** is steered to content. In this example, user **105** is linked to content provider **100** by a communications network, such as the Internet, using a Web-browser or any other suitable access modality. Content provider **100** includes, among other things, a content steering engine **110** for steering user **105** to relevant content within a body of content **115**. In Figure **1**, content steering engine **110** receives from user **105**, at user interface **130**, a request or query for content relating to a particular concept or group of concepts manifested by the query. In addition, content steering engine **110** may also receive other information obtained from the user **105** during the same or a previous encounter. Furthermore, content steering engine **110** may extract additional information by carrying on an intelligent dialog with user **105**, such as described in commonly assigned Fratkina et al. U.S. Patent Application Serial No. 09/798,964 entitled "A SYSTEM AND METHOD FOR PROVIDING AN INTELLIGENT MULTI-STEP DIALOG WITH A USER," filed on March 6, 2001, which is incorporated by reference herein in its entirety, including its description of obtaining additional information from a user by carrying on a dialog. In one example, such a user-provider dialog also uses either textual or structured data or metadata, such as described in commonly assigned Huffman U.S. Patent Application Serial No. 60/291,010 entitled "SYSTEM AND METHOD FOR PROVIDING STRUCTURED DATA," filed on May 16, 2001, which is incorporated by reference herein in its entirety, including its description of providing or using structured data.

In response to any or all of this information extracted from the user, content steering engine **110** outputs at **135** indexing information relating to one or more relevant pieces of content, if any, within content body **115.** In response, content body **115** outputs at user interface **140** the relevant content, or a descriptive indication thereof, to user **105**. Multiple returned content "hits" may be unordered or may be ranked according to perceived relevance to the user's query. One embodiment of a retrieval system and method is described in commonly assigned Copperman et al. U.S. Patent Application Serial No. 09/912,247, entitled SYSTEM AND METHOD FOR PROVIDING A LINK RESPONSE TO INQUIRY, filed July 23, 2001, which is incorporated by reference herein in its entirety, including its description of a retrieval system and method. Content provider **100** may also adaptively modify content steering engine **110** and/or content body **115** in response to the perceived success or failure of a user's interaction session with content provider **100**. One such example of a suitable adaptive content provider **100** system and method is described in commonly assigned Angel et al. U.S. Patent Application Serial No. 09/911,841 entitled "ADAPTIVE INFORMATION RETRIEVAL SYSTEM AND METHOD," filed on July 23, 2001, which is incorporated by reference in its entirety, including its description of adaptive response to successful and nonsuccessful user interactions. Content provider **100** may also provide reporting information that may be helpful for a human knowledge engineer {"KE") to modify the system and/or its content to enhance successful user interaction sessions and avoid nonsuccessful user interactions, such as described in commonly assigned Kay et al. U.S. Patent Application Serial No. 09/911,839 entitled, "SYSTEM AND METHOD FOR MEASURING THE QUALITY OF INFORMATION RETRIEVAL," filed on July 23, 2001, which is incorporated by reference herein in its entirety, including its description of providing reporting information about user interactions.

### Overview of Example CRM Using Taxonomy-Based Knowledge Map

The system discussed in this document can be applied to any system that assists a user in navigating through a content base to desired content. A content base can be organized in any suitable fashion. In one example, a hyperlink tree structure or other technique is used to provide case-based reasoning for guiding a user to content. Another implementation uses a content base organized by a knowledge map made up of multiple taxonomies to map a user query to desired content, such as described in commonly assigned Copperman et al. U.S. Patent Application Serial No. 09/594,083, entitled SYSTEM AND METHOD FOR IMPLEMENTING A KNOWLEDGE MANAGEMENT SYSTEM, filed on June 15, 2000 (Attorney Docket No. 07569-0013), which is incorporated herein by reference in its entirety, including its description of a multiple taxonomy knowledge map and techniques for using the same.

As discussed in detail in that document (with respect to a CRM system) and incorporated herein by reference, and as illustrated here in the example knowledge map **200** in Figure **2**, documents or other pieces of content (referred to as knowledge containers **201**) are mapped by appropriately-weighted tags **202** to concept nodes **205** in multiple taxonomies **210** (i.e., classification systems). Each taxonomy **210** is a directed acyclical graph (DAG) or tree (i.e., a hierarchical DAG) with appropriately-weighted edges **212** connecting concept nodes to other concept nodes within the taxonomy **210** and to a single root concept node **215** in each taxonomy **210.** Thus, each root concept node **215** effectively defines its taxonomy **210** at the most generic level. Concept nodes **205** that are further away from the corresponding root concept node **215** in the taxonomy **210** are more specific than those that are closer to the root concept node **215**. Multiple taxonomies **210** are used to span the body of content (knowledge corpus) in multiple different (typically orthogonal) ways. In an alternate embodiment, taxonomies **210** are implemented as flat groups, rather than as the hierarchical structures illustrated in Figure **2**.

As discussed in U.S. Patent Application Serial No. 09/594,083 and incorporated herein by reference, taxonomy types include, among other things, topic taxonomies (in which concept nodes **205** represent topics of the content), filter taxonomies (in which concept nodes **205** classify metadata about content that is not derivable solely from the content itself), and lexical taxonomies (in which concept nodes **205** represent language in the content). Knowledge container **201** types include, among other things: document (e.g., text); multimedia (e.g., sound and/or visual content); e-resource (e.g., description and link to online information or services); question (e.g., a user query); answer (e.g., a CRM answer to a user question); previously-asked question (PQ; e.g., a user query and corresponding CRM answer); knowledge consumer (e.g., user information); knowledge provider (e.g., customer support staff information); product (e.g., product or product family information). It is important to note that, in this document, content is not limited to electronically stored content, but also allows for the possibility of a human expert providing needed information to the user. For example, the returned content list at **140** of Figure **1** herein could include information about particular customer service personnel within content body **115** and their corresponding areas of expertise. Based on this descriptive information, user **105** could select one or more such human information providers, and be linked to that provider (e.g., by e-mail, Internet-based telephone or videoconferencing, by providing a direct-dial telephone number to the most appropriate expert, or by any other suitable communication modality).

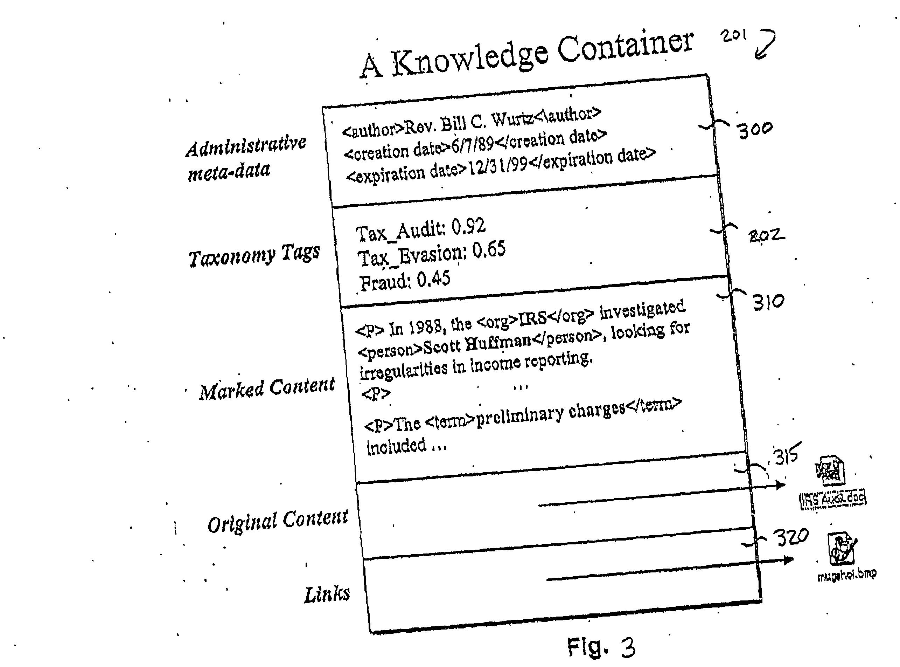

Figure **3** is a schematic diagram illustrating generally one example of portions of a document-type knowledge container **201**. In this example, knowledge container **201** includes, among other things, administrative metadata **300**, contextual taxonomy tags **202**, marked content **310**, original content **315**, and links **320**. Administrative metadata **300** may include, for example, structured fields carrying information about the knowledge container **201** (e.g., who created it, who last modified it, a title, a synopsis, a uniform resource locator (URL), etc. Such metadata need not be present in the content carried by the knowledge container **201**. Taxonomy tags **202** provide context for the knowledge container **201**, i.e., they map the knowledge container **201**, with appropriate weighting, to one or more concept nodes **205** in one or more taxonomies **210.** Marked content **310** flags and/or interprets important, or at least identifiable, components of the content using a markup language (e.g., hypertext markup language (HTML), extensible markup language (XML), etc.). Original content **315** is a portion of an original document or a pointer or link thereto. Links **320** may point to other knowledge containers **201** or locations of other available resources.

U.S. Patent Application Serial No. 09/594,083 also discusses in detail techniques incorporated herein by reference for, among other things: (a) creating appropriate taxonomies **210** to span a content body and appropriately weighting edges in the taxonomies **210**; (b) slicing pieces of content within a content body into manageable portions, if needed, so that such portions may be represented in knowledge containers **201**; (c) autocontextualizing the knowledge containers **201** to appropriate concept node(s) **205** in one or more taxonomies, and appropriately weighting taxonomy tags **202** linking the knowledge containers **201** to the concept nodes **205**; (d) indexing knowledge containers **201** tagged to concept nodes **205**; (e) regionalizing portions of the knowledge map based on taxonomy distance function(s) and/or edge and/or tag weightings; and (f) searching the knowledge map **200** for content based on a user query and returning relevant content. Other techniques for associating documents or other knowledge containers **201** with concept nodes **205** are described in commonly assigned Ukrainczyk et al. U.S. Patent Application Serial No. 09/864,156, entitled A SYSTEM AND METHOD FOR AUTOMATICALLY CLASSIFYING TEXT, filed on May 25, 2001, which is incorporated herein by reference in its entirety, including its disclosure of a suitable example of a document classifier. Still other techniques for associating documents or other knowledge containers **201** with concept nodes **205** are described in commonly assigned Waterman et al. U.S. Patent Application Serial No. 10/004,264 (Attorney Docket No. 1546.009US1), entitled DEVICE AND METHOD FOR ASSISTING KNOWLEDGE ENGINEER IN ASSOCIATING INTELLIGENCE WITH CONTENT, filed on October 31, 2001, which is incorporated herein by reference in its entirety, including its disclosure of a knowledge engineer user interface for tagging documents to concept nodes.

It is important to note that the user's request for content need not be limited to a single query. Instead, interaction between user **105** and content provider **100** may take the form of a multi-step dialog. One example of such a multi-step personalized dialog is discussed in commonly assigned Fratkina et al. U.S. Patent Application Serial No. 09/798,964 entitled, A SYSTEM AND METHOD FOR PROVIDING AN INTELLIGENT MULTI-STEP DIALOG WITH A USER, filed on March 6, 2001 (Attorney Docket No. 07569-0015), which is incorporated by reference herein in its entirety, including its dialog description. That patent document discusses a dialog model between a user **105** and a content provider **100**. It allows user **105** to begin with an incomplete or ambiguous problem description. Based on the initial problem description, a "topic spotter" directs user **105** to the most appropriate one of many possible dialogs. By engaging user **105** in the appropriately-selected dialog, content provider **100** elicits unstated elements of the problem description, which user **105** may not know at the beginning of the interaction, or may not know are important. It may also confirm uncertain or possibly ambiguous assignment, by the topic spotter, of concept nodes to the user's query by asking the user explicitly for clarification. In general, content provider **100** asks only those questions that are relevant to the problem description stated so far. Based on the particular path that the dialog follows, content provider **100** discriminates against content it deems irrelevant to the user's needs, thereby efficiently guiding user **105** to relevant content. In one example, the dialog is initiated by an e-mail inquiry from user **105**. That is, user **105** sends an e-mail question or request to CRM content provider **100** seeking certain needed information. The topic spotter parses the text of the user's e-mail and selects a particular entry-point into a user-provider dialog from among several possible dialog entry points. The CRM content provider **100** then sends a reply e-mail to user **105**, and the reply e-mail includes a hyperlink to a web-browser page representing the particularly selected entry-point into the dialog. The subsequent path taken by user **105** through the user-provider dialog is based on the user's response to questions or other information prompts provided by CRM content provider **100**. The user's particular response selects among several possible dialog paths for guiding user **105** to further provider prompts and user responses until, eventually, CRM system **100** steers user **105** to what the CRM system **100** determines is most likely to be the particular content needed by the user **105.**

For the purposes of the present document, it is important to note that the dialog interaction between user **105** and content provider **100** yields information about the user **105** (e.g., skill level, interests, products owned, services used, etc.). The particular dialog path taken (e.g., clickstream and/or language communicated between user **105** and content provider **100**) yields information about the relevance of particular content to the user's needs as manifested in the original and subsequent user requests/responses. Moreover, interactions of user **105** not specifically associated with the dialog itself may also provide information about the relevance of particular content to the user's needs. For example, if user **105** leaves the dialog (e.g., using a "Back" button on a Web-browser) without reviewing content returned by content provider **100**, an nonsuccessful user interaction (NSI) may be inferred. In another example, if user **105** chooses to "escalate" from the dialog with automated content provider **100** to a dialog with a human expert, this may, in one embodiment, be interpreted as an NSI. Moreover, the dialog may provide user **105** an opportunity to rate the relevance of returned content, or of communications received from content provider **100** during the dialog. As discussed above, one or more aspects of the interaction between user **105** and content provider **100** may be used as a feedback input for adapting content within content body **115**, or adapting the way in which content steering engine **110** guides user **105** to needed content.

### Overview of Distributed CRM Content Provider Examples

Content provider **100,** as described above with respect to Figures **1 - 3,** may be referred to as a concept-organized content provider **100**, because it organizes documents or other knowledge containers **201** according to concept nodes to which the documents are tagged. The concept node organizational structure is used in addition to-or even in lieu of-text searching the documents for the particular terms (i.e., words or phrases) in a user's query. In the concept-organized content provider **100,** user query terms, a user-provider dialog, and/or user attributes (from the same or a similar user) may constrain the user's search to one or more concept nodes or associated regions of the knowledge map **200**. As discussed above, autocontextualizing documents or other knowledge containers **201** to concepts **205** reduces implementation costs. This enables the system to handle a large number of documents. In a CRM application, however, human beings must still create and update the documents, which typically requires a significant expense.

A particular enterprise's CRM system must typically inform users about several different products. Each such product may include several components. These components may be produced by the same enterprise, or by other enterprises. Components from such vendor enterprises may include subcomponents from still other enterprises. Even if a product is substantially produced by a single enterprise, a value-adder (e.g., a reseller, a help desk at an end-user enterprise, or another) may customize or otherwise modify the product to add value. A particular customer may need information relating to the whole product, to a particular component of the product, or to a particular enhancement to the product. Therefore, the needed information may originate from any of several different sources within or outside of the customer's initial point of contact.

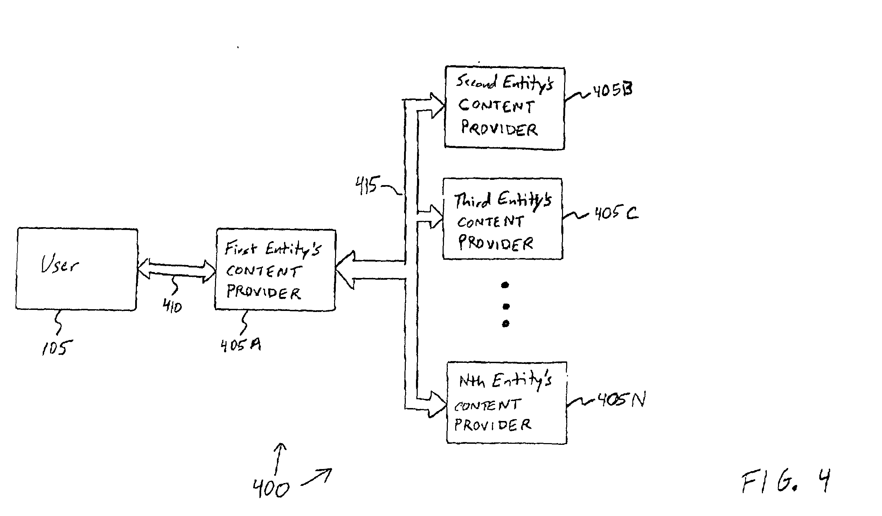

Figure **4** is a block diagram illustrating generally an example of a distributed CRM content provider system **400**, which allows content to be separately created or managed by different entities. In Figure **4**, system **100** includes a primary content provider **405A,** hosted by a first entity, and various secondary content providers **405B-N,** hosted by other entities. In one example, these different entities are different business enterprises producing products, components of products, or enhancements that add value to a product produced by another enterprise. In another example, these different entities are different organizational units within the same business enterprise. In Figure **4**, user **105** accesses primary content provider **405A** using communication network **410** (such as by using a web browser on a computer or other network access device). Content providers **405A-N** are communicatively coupled to each other by communication network **415,** which may be the same as (or different from) network **410**.

In Figure **4**, a user **105** accesses primary CRM content provider **405A**, such as to request product information (e.g., about marketing, sales, support, etc.). As the user's initial point of contact, the "affinity enterprise" hosting primary content provider **405A** is the enterprise that user **105** most closely associates with the product and/or expects to solve his or her problem. If needed, during the user's session with primary content provider **405A**, primary content provider **405A** accesses content created or maintained by other business enterprises hosting other content providers **405B-N.** In Figure **4,** each enterprise need only create and/or manage content relating to its particular products (or enhancements), and may do so substantially independently from the other enterprises. Each content provider **405A**-N includes an interface for being called by another content provider, for calling another content provider, and/or for receiving data from another content provider in response to an earlier call to that content provider.

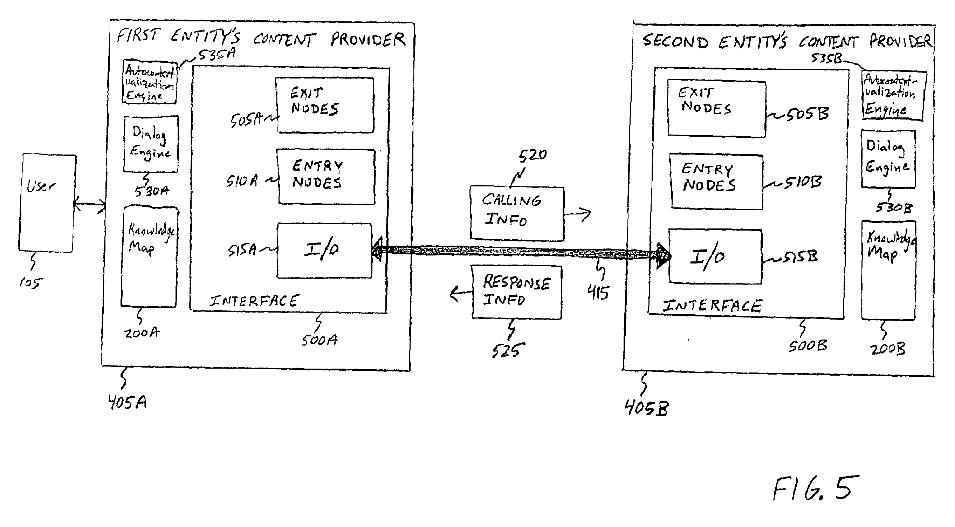

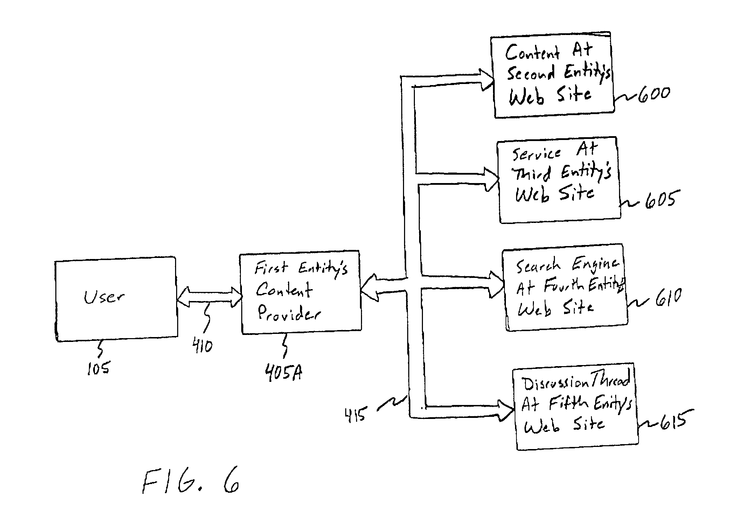

Figure **5** is a block diagram illustrating generally one example in which a user **105** accesses an affinity enterprise's CRM content provider **405A**, which, in servicing that user, in turn contacts a secondary content provider **405B**. In one example, content providers **405A-B** are dialog-driven concept-organized content providers, as discussed above with respect to Figures **1-3**, but each includes a respective interface **500A-B** allowing interaction with other content providers **405A-N.** Interfaces **500A-B** include respective exit node lists **505A-B** and entry node lists **510A-B** stored in memory. Exit node lists **505A-B** and entry node lists **510A-B** map between concept nodes **205** in different knowledge maps **200** associated with different content providers **405A-N.** For example, exit node list **505A** delineates which concept nodes **205** in knowledge map **200A** call concept nodes **205** in other knowledge maps **200** associated with different content providers **405B-N.** Entry node list **510B** delineates which concept nodes **205** in knowledge map **200B** may be called by other content providers **405A** and **405C-N.** Each exit node is a concept node **205** providing, among other things, connection information within calling information **520**, as discussed below.

In this example, each exit node includes a trigger that activates the call to another content provider **405** upon determining that the other content provider **405** might include information relevant to the user's query. One technique of determining that the other content provider **405** might include relevant information is if the exit node is among the concept nodes that were confirmed by the user-provider dialog as being relevant to the user's session. Another technique of determining that the other content provider **405** might include relevant information is if the user's query includes certain text words or phrases specified by the trigger associated with the exit node. In one example, this triggers a call to the specified other content provider without requiring any user-provider dialog to confirm that the exit node concept is relevant to the user's query; such a relevance determination is based directly on the language of the user's query (or subsequent user input). However, the call triggers need not be based on confirmed concept nodes or user language. In other examples, the call triggers are based on user attributes (e.g., access privileges, experience levels, or other directly specified or indirectly read characteristics). As described below, the trigger provides calling information **520** to the called content provider **405** that includes input for a query in the called content provider **405.** In one example, such calling information includes a list of confirmed concept nodes or text for generating a query in the called content provider **405.**

Interfaces **500A-B** also include respective input/output devices **515A-B.** In one example, content providers **405A-B** each includes a respective dialog engine **530A-B** for carrying on an interactive dialog with user **105.** An example of such a dialog engine is described commonly assigned Fratkina et al. U.S. Patent Application Serial No. 09/798,964 entitled, A SYSTEM AND METHOD FOR PROVIDING AN INTELLIGENT MULTI-STEP DIALOG WITH A USER, filed on March 6, 2001 (Attorney Docket No. 07569-0015), which is incorporated by reference herein in its entirety, including its dialog description. In another example, content providers **405A-B** each includes an autocontextualization engine **535A-B** to map either content or user query language to particular concept nodes in the respective knowledge map **200A-B** of the corresponding content provider **405A-B,** such as described in commonly assigned Copperman et al. U.S. Patent Application Serial No. 09/594,083, entitled SYSTEM AND METHOD FOR IMPLEMENTING A KNOWLEDGE MANAGEMENT SYSTEM, filed on June 15, 2000 (Attorney Docket No. 07569-0013), which is incorporated by reference herein in its entirety, including its autocontextualization description.

Figure **5** illustrates an example in which content provider **405A** provides calling information **520** to content provider **405B,** which returns response information **525**. In one example, this information is communicated in packets over network **415** using a standard Internet communication protocol. In one example, calling information **520** includes connection identification information, the user query, and session context. Connection identification information identifies calling content provider **405A** and the particular calling concept node in knowledge map **200A.** It also identifies the called content provider **405B** (e.g., by specifying its uniform resource locator ("URL") or other network address) and the particular called concept node in knowledge map **200B.** Calling information **520** also includes the user query, that is, text or other language received from user **105** specifying the problem or information sought.

Calling information **520** may also include other session context from the user's interaction session with calling content provider **405A**. In addition to the user query, such session context may include, among other things: (1) any dialog interaction between content provider **405A** and user **105**, such as questions from content provider **405A** to user **105** or responses from user **105** (e.g., a language response or a user-selection among predefined responses); (2) metadata or other information about which, if any, concept nodes **205** (or regions of groups of concept nodes **205**) in knowledge map **200A** were deemed relevant (or irrelevant) to the user's needs during a dialog interaction or other aspect of the user's session with content provider **405A**; or (3) any user attributes or preferences obtained from the user's session with content provider **405A**, or from previous sessions with that user or similar users (e.g., such user attributes may include a user's experience level, obtained by evaluating a user's clickstream, reading stored "cookies," etc., or the user's entitlement or access privileges). The session context may also include a record of any previous calls to other content providers **405B-N** during the user's interaction session, together with any resulting session context that accumulated during the user's session with such other content providers **405B-N.** Calls between content providers indicate, among other things, which entity or entities are associated with information that might be relevant to the user's query.

In Figure **5,** content provider **405B** provides response information **525** to content provider **405A.** Content provider **405A** may, in turn, provide a portion of such response information **525** to user **105.** In one example, response information **525** includes the sought-after content, such as electronically-stored documents, or a list of such documents, managed by content provider **405B,** that content provider **405B** deems likely relevant to the user's needs. In another example, calling information **520** and response information **525** implement a new or continued dialog between content provider **405B** and user **105** (e.g., through content provider **405A**). In another example, the content included in response information **525** provides services to the user, such as, for example: entry into a network-based discussion thread, user community, or other organization; additional online interactivity (e.g., web-based interface for chat with a human customer service representative); an application program that is called to meet the user's needs (e.g., a mortgage calculator, a product configuration and costing program, etc.).

In this manner, user **105** may receive content from a directly-accessed first content provider or an indirectly-accessed second content provider. The different entities hosting these content providers may contract to provide the information under the branding of the entity hosting the directly-accessed content provider, the branding of the entity hosting the indirectly-accessed content provider, or both. Although, in one example, the content is delivered in a segregated fashion (e.g., a first list of documents from the first entity's directly-accessed content provider and a second list of documents from the second entity's indirectly-accessed content provider, in another example, the content is integrated before being delivered (e.g., a single list of documents from both the first entity's directly-accessed content provider and the second entity's indirectly-accessed content provider). One such example integrates ranked content lists from each entity. In this example, the separate ranked content lists are melded into a single ranked list using appropriate collection fusion techniques, such as relevance score normalization, round robin techniques, a logistic regression model, or the like.

The example of Figure **5** allows user **105** to continue, with a second entity's content provider **405B**, an interaction session that user **105** initiated with a first entity's content provider **405A.** In so doing, at least some of the information already accrued during the user's session with content provider **405A** is passed along to the content provider **405B.** Therefore, user **105** need not again provide such information to content provider **405B** that the user **105** has already provided to content provider 405A. Moreover, in at least one embodiment, the user's interaction session continues through content provider **405A,** through which content provider **405B** provides any continued dialog and any returned content. Because, in this example, the user's session continues through the first entity's content provider **405A**, it may be branded accordingly, even when dialog or content is actually being obtained from a different entity (dual branding may also be used). This preserves-and possibly even enhances-the relationship between user **105** and the first entity hosting content provider **405A**. Building such relationships is important and valuable for a business enterprise, particularly in a content-rich medium, such as the Internet, where many other enterprises compete for users' attention, and possibly even derive advertising revenue from their users' web site visits.

In one sense, session context passed from calling content provider **405A** to called content provider **405B** represents the then-existing state of the user's interaction session with content provider **405A**, e.g., in terms of user query and attributes, user-provider dialog, and metadata representing any resulting constraints to particular regions of knowledge map **200A**. In one example, one or more aspects of this state information is harmonized across content providers **405A-N**, such as by adopting standardized representations of such information. For example, the host entities could agree that a particular concept node **205** pertaining to the Microsoft "WINDOWS XP" operating system would be represented by the text string "windows_xp" in each of knowledge maps **200A-B.** Then, in this example, if a computer manufacturer (e.g., Dell Computer Corp.) hosting primary content provider **405A** determined, during a user session with a Dell computer purchaser, that the user's query pertains to WINDOWS XP software, rather than to Dell hardware, content provider **405A** would call Microsoft's content provider **405B** to obtain the needed information. Calling information **520** would include an indication that the "windows_xp" concept node **205** in knowledge map **405A** was deemed relevant to the user's query. Accordingly, content provider **405B,** in servicing the user, would begin a search within knowledge map **200B** for documents pertaining to a "windows_xp" concept node **205** in knowledge map **200B.** Content provider **405B** would continue the dialog, as needed, to further narrow the scope of the user's query to focus on more particular subjects related to the "windows_xp" concept node **205** within knowledge map **200B.**

In an alternative example, however, the concept nodes **205** or other state information need not be harmonized across content providers **405A-N**. Even so, such state information generated during a session with a particular content provider **405A-N** could be used during a session with a different content provider **405A-N**. For example, the Dell content provider **405A** may represent the WINDOWS XP concept textually as "windows XP" and the Microsoft content provider **405B** may represent the same concept textually as "XP." Then, if the user's interaction session with the Dell content provider **405A** indicates that the user's query pertains to WINDOWS XP software, Dell content provider **405A** calls the Microsoft content provider **405B** with an indication that its "windows_xp" concept node **205** has been confirmed as relevant to the user's query. In one example, without harmonization of concept nodes between content providers, the Dell content provider first converts its representation of confirmed concept node(s) into textual form. For example, where the "windows_xp" concept node of the Dell content provider **405A** has been confirmed as relevant to the user's query, Dell content provider **405A** calls the Microsoft content provider **405B** with the textual input parameter "Windows XP". In this example, even without harmonization of concept node representations between content providers, the Microsoft content provider **405B** can still use this textual information to initiate a narrower search than if the user had contacted the Microsoft content provider **405B** directly, without the accumulated session context information from the user's session with the Dell content provider **405A.** For example, the textual information "Windows XP" may fall within a synonym list for the "XP" concept node in the knowledge map **200B,** even though no prior standardization was agreed upon between the Dell and Microsoft enterprises. In another example, in which "Windows XP" does not fall within such a synonym list, Microsoft content provider **405B** still uses the textual description "Windows XP" of the Dell concept "windows_xp" as input search terms within a textual search of the documents managed by the Microsoft content provider **405B.** Thus, text describing a concept node **205**, or any other session context information, is made available to focus the search within a called content provider even without any prior agreement between calling and called content providers adopting standardized concept node definitions. In an alternative example, the conversion from concept node to text is made by the called, rather than the calling, content provider, for mapping to a called concept node or for use as text input to a search engine. In another example, a knowledge engineer managing a particular entity's content provider **405A-N** creates and maintains an equivalence table or other mapping between calling and called concept nodes **205** (thereby obtaining a correspondence therebetween) without relying on inputting session context as search terms of a text search engine to narrow the search within the content of the called content provider. The equivalence table may be created based on a call log, stored in memory at the called content provider. The call log records previous calls from other content providers and the session context information included in those previous calls. Moreover, the mapping between calling and called concept nodes need not be performed using a table. Other examples will include other computable mappings to obtain the transformation between calling and called concept nodes. Such mappings need not be one-to-one correspondences between calling and called concept nodes. Among other things, the mapping may call certain concept node(s) based on rules applied to one or multiple confirmed calling concept nodes and/or other conditions that may be independent of the confirmed calling concept nodes, such as language present in the user query, the particular user's access privileges, etc. As a particular example, confirmed user text or concept nodes of "ipaq" and "startup" of a calling content provider hosted by Compaq Computer Corp. may trigger a call to "Windows CE" and "booting" concept nodes on a different content provider hosted by Microsoft Corp., while either of "ipaq" and "startup," alone, would not trigger any call to the Microsoft content provider.

In this example, the at least partial absence of harmonization or standardization of session context across various content providers **405A-N** enhances the distributed nature of the CRM system and techniques illustrated in and described with respect to Figures **4** and **5.** It allows each enterprise to create and maintain its knowledge map **200A-N** without *a priori* knowledge of how the knowledge maps used by other enterprises are constructed. However, in an alternate example, a network-accessible master list of standardized concept nodes 205 is created and maintained. The master list includes, in one example, agreed-upon standard representations of particular concepts and/or a master equivalence table of concept nodes for the various enrolled CRM content providers **405A-N.**

### Examples of Other Connections And Other Content Provider Types

In one example, a distributed CRM system is implemented, as discussed above, using calling and called concept-organized content providers that each engage in an interactive user-provider dialog, such as to confirm particular concept nodes or regions as likely relevant to the user's query. However, other types of content providers can be used in, or coupled to, a distributed CRM system **400**. Moreover, in another example, distributed CRM is used to link the user **105** to content available from enterprises or entities that need not formally participate in the distributed CRM system **400**.

Figure **6** is a block diagram illustrating generally, by way of example, but not by way of limitation, other types of connecting links available at first entity's content provider **405A**. Such connecting links (also sometimes referred to herein as "connectors," "links," "calls," or "triggers") are, in one example, associated with particular concept nodes **205** within knowledge map **200A** of content provider **405A**. If, during an interactive user-provider dialog, such linking concept nodes are confirmed as likely being relevant to the user's query, then the user is linked to another entity as specified by the link. The called entity either continues the user's session, or returns content to the calling content provider, or does both.

In a first example, a "content link" connector within content provider **405A** retrieves particular content from a second entity's web site **600**, which may, but need not, be hosted by an entity enrolled in the distributed CRM system **400**. Such retrieved content includes, by way of example, but not by way of limitation, an electronically-stored document, a web page, an audio clip, a video clip, an audiovisual clip, or a POWERPOINT or similar slide presentation, or any other form of information that may be useful to the user **105**. In one example, the retrieval of such content is triggered by a determination, by the user-provider dialog, that the user's query corresponds to a previously-asked question ("PQ") addressed by the content to be retrieved. The content link at content provider **405A** includes a uniform resource locator ("URL") for calling, over network **415**, the appropriate address or location of the content, which is created, updated, stored, and/or managed at the second entity's web site **600**.

In a second example, a "guidance link" connector within content provider **405A** links the user **105** to a service provided by a third entity's web site **605,** which may, but need not, be hosted by an entity enrolled in the distributed CRM system **400**. In one example, the user-provider dialog at a computer manufacturer (e.g., Dell Computer Corp.) content provider **405A** determines that the user's problem requires a software patch from a software manufacturer (e.g., Microsoft Corp.). In this example, the "guidance link" connector within content provider **405A** includes a URL for calling, over network **415**, the appropriate address or location of a web page for obtaining a downloadable software patch from a third entity's (e.g., Microsoft's) web site **605**. In another example, the "guidance link" connector, within calling content provider **405A** initiates execution an application program at third entity's web site **605** (e.g., using an application program interface (API), Web Services interface, a "C" language program, or any other suitable technique). In such instances, the "guidance link" connector is also referred to as a "application link" connector. In one example, the "guidance link" or "application link" connector also includes user attributes or other session context (e.g., if the user-provider dialog has already established what operating system version the user is running, etc.), in XML or other suitable format, for use by the service at the third entity's web site **605** (e.g., for pre-populating a web form, etc.).

In a third example, an "external search link" connector within content provider **405A** links user **105** to a search of content provided by a fourth entity's web site **610**, which may, but need not, be hosted by an entity enrolled in the distributed CRM system **400.** In one example, the user-provider dialog at content provider **405A** determines that content from the fourth entity is likely relevant to the user's needs. Even though the fourth entity maintains a web site **610**, it may include only a text search engine for accessing its content, rather than a dialog-driven concept-organized content provider. In this example, the "external search link" connector within content provider **405A** includes a URL for calling, over network **415,** the text search engine at the fourth entity's web site **610.** In one example, the external search link connector includes the user query, user attributes, and/or any session context. In one example, the search engine at fourth entity's web site **610** is called using, as input for the text search, terms from the user query and/or, as discussed above, textual representations of confirmed concept nodes from the session context. The text search engine then searches the data or metadata associated with the fourth entity's content for textual matches to the input. The retrieved content is returned to the user **105**, either directly, or via content provider **405A**.

In a fourth example, a "thread link" connector within content provider **405A** links the user **105** to a discussion thread at fifth entity's web site **615**, which may, but need not, be hosted by an entity enrolled in the distributed CRM system **400**. In one example, the user-provider dialog at content provider **405A** indicates that content from the fifth entity is likely relevant to the user's needs. Even though, in one example, the fifth entity maintains a web site **615**, in one example, it need not include a dialog-driven concept-organized content provider, but instead provides only a discussion/chat thread to which customers or others contribute. In this example, the "thread link" connector within content provider **405A** includes a URL for calling, over network **415,** the discussion thread at fifth entity's web site **615.** In one example, fifth entity's web site **615** includes a text search engine for searching for particular text within the discussion thread. In such an example, the "thread link" connector may also include the user query, user attributes, and/or any search context for calling the discussion thread search engine using, as inputs, terms from the user query and/or textual representations of confirmed concept nodes from the session context.

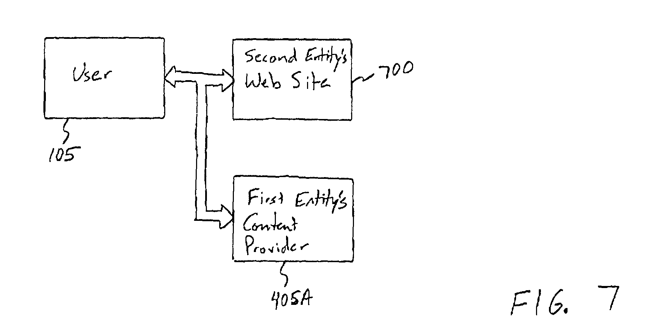

For the examples discussed above with respect to Figure **6**, in certain circumstances, content provider **405A** is called by another entity, which need not be another dialog-driven concept-organized content provider **405B-N,** and which may, but need not, be hosted by an entity enrolled in the distributed CRM system **400**. Figure **7** is a block diagram illustrating generally an example of a dialog-driven concept-organized content provider including a "slave search link" input connector for being called by another entity's web site **700** or other content provider. In one example, user **105** queries second entity's web site **700** (e.g., by providing a textual or other language query, or using a particular user-selection of hyperlinks or other indications of the user's needs). In this example, the "slave search link" connector received by content provider **405A** specifies the URL providing addressing for content provider **405A**, and provides calling information, if needed. Such calling information includes, in one example, a user query received from user **105** at a search engine of second entity's web site **700**, or other text from the calling web site **700**. This calling information is used to formulate a user query or session context at the called content provider **405A.** In one example, such session context defines a particular entry state into a user-provider dialog at called content provider **405A**. In another example, such session context restricts searching, during the user's session with content provider **405A**, to specified concept nodes or regions within knowledge map **200A**. In one example, dialog-driven concept-organized content provider **405A** then initiates or continues a dialog, such as directly with the user **105** (i.e., without second entity's web site **700** as an intermediary). In another example, content provider **405A** uses the calling information included in the slave search link connector to search for relevant documents managed by content provider **405A**, which are then returned to the user **105** either directly or via second entity's web site **700**, without undertaking any user-provider dialog.

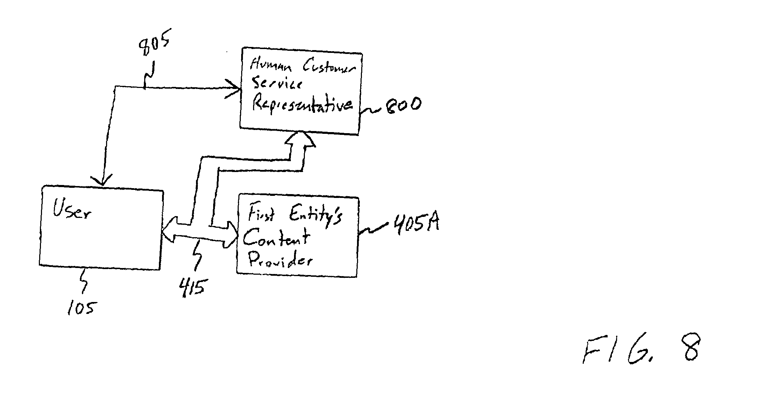

Figure **8** is a block diagram illustrating generally one example of an "escalation link" connector and a "de-escalation link" connector. In escalating a user's session with automated content provider **405A** to an interface for interacting with a human customer service representative **800**, several triggers can activate this handoff. In a first example, a web browser user interface of content provider **405A** includes a clickable button that allows the user **105** to request escalation to a human customer service representative **800**. In a second example, content provider **405A** detects a nonsuccessful service interaction (e.g., using techniques discussed or incorporated herein), which escalates the session to an interface for interacting with a human customer service representative **800** (either automatically or after prompting the user **105** and receiving confirmation that such escalation is desired). In one example, content provider **405A** deems the user's session nonsuccessful if the user query and dialog turn up no relevant content, it infers that the returned content does not meet the user's needs, or if the dialog "bogs down." In one example, the dialog is deemed "bogged down" if there are long pauses during the user's session. In another example, the dialog is deemed "bogged down" if, after viewing a list of returned documents, the user selects a "Back" web browser button without opening a document. In one example, such conditions escalate the user's automated CRM session to a session with the human customer service representative **800**. Such escalation occurs either automatically or after prompting the user and receiving confirmation that the user desires such escalation.

In one example, the human customer service representative **800** interacts with the user **105** over a network **415**, either directly or via the user interface of content provider **405A**. This interaction between the customer service representative **800** and the user **105** uses any suitable interface modality (e.g., interactive chat; e-mail correspondence; internet phone, etc.) for the user and/or the customer service representative. In another example, the human customer service representative **800** interacts with the user **105** without using network **415**. In one example, this interaction uses a separate telephone session over telephone network **805**. In one such example, content provider **405A** uses the "escalation link" connector to communicate the user query and session context to customer service representative **800**, and to provide a "trouble ticket" to the user **105** that identifies the user's session and provides the user **105** with a telephone number for contacting the customer service representative **800**. In an alternative example, content provider **405A** obtains the user's telephone number via the "escalation link" connector so that the customer service representative **800** can initiate telephone contact with the user **105**.

In one example of de-escalating the user's session (e.g., where the user **105** has telephoned customer service representative **800** over telephone network **805**), the customer service representative **800** refers user **105** to an automated CRM session with content provider **405A**. Some or all information entered by customer service representative **800** into a call center customer database (e.g., customer contact information, product used by the customer, type of problem being experienced by the customer, etc.) is communicated, over network **415**, to content provider **405A** using a "de-escalation link" connector. In one example, content provider **405A** then e-mails, over network 415, a message that includes a URL hyperlink into a particular user-provider dialog state of a user session with content provider **405A**. By clicking on the provided URL hyperlink, the user **105** enters a de-escalated automated CRM session with content provider **405A** at the particular dialog state specified by the customer service representative **800**. In another example, the user **105** initiates the de-escalated session with content provider **405A**. In such an example, content provider **405A** recognizes the user **105** (e.g., based on username, or a session identifier passed by the human customer service representative **800** in the "de-escalation link" connector), and begins the automated CRM session at the particular dialog state specified by the customer service representative **800**.

### Examples of Advantages or Variations of a Distributed CRM System

In one example, as discussed above and as illustrated in Figure **4**, a distributed CRM content provider system **400** allows CRM content to be independently created and maintained at content providers associated with various enterprises or other entities. However, in one example, the content is delivered to the user by a primary content provider hosted by a affinity enterprise or other entity. The affinity enterprise retains, if desired, at least partial branding of the provided content. In one example, component vendors of the affinity enterprise's product host the secondary content providers. In another example, the primary content provider is a value-adder (e.g., a reseller, a help desk at an end-user enterprise, or another) of a product. For a value-adding entity, retaining at least partial branding of the content is typically particularly important, for such branding conveys the source of the value-added aspects of the product.

Distributed CRM offers a solution to a daunting problem. As whole products both become more complex and more likely to be offered via e-business, great customer service becomes ever harder to deliver. The source of a whole product failure might lie in any one of hundreds of suppliers. The right source of help for the consumer may be completely disconnected from the source of the problem. Economics dictates automated online support, but, stripped of the costly but efficacious help of a human call center representative, conventional e-service typically generates customer frustration. Distributed CRM enables e-communities instantiated by a partnership of the enterprises responsible for a whole product. However, in one example, such a partnership is led by a single organization charged with creating the online customer experience. Therefore, one example of distributed CRM provides, among other things, an Internet community that is organized around a context provider and that creates, sells, and/or supports a whole product.

In this example, customer service via distributed CRM is a win-win. Customers get help naturally, at the whole product level, and navigate seamlessly from supplier to supplier as their particular problem warrants. Enterprises need only help customers with (and create content about) the problems for which that company is actually responsible. This dramatically reduces support costs while enhancing customer loyalty. In one example, a primary content provider (also sometimes referred to as a "context provider") is charged with managing customer service across the whole product, and employs a dialog-driven concept-organized automated CRM content provider to automate e-support. In one example, the content provider delivers dialog and personalization to discover the user's problem, and then routes and escalates the customer's session to the appropriate enterprise within the distributed CRM system for a solution. Therefore, distributed CRM improves customer experience and decreases the enterprise's cost of providing customer support.

Customers typically buy whole products. For example, a personal computer owner purchases a machine for efficiency, internet browsing, game-playing, etc. The buyer doesn't regard this whole product as an aggregation of a central processing unit (CPU), operating system, application software, and peripherals. And, when problems occur, the customer may have neither the competence nor the willingness to decompose the whole product into its constituent components in order to obtain service.

Today's whole products are typically created from the combined contributions of many individual enterprises. For example, the whole product of "home internet access" may be a partnership provided by an Internet appliance, an Internet service provider (ISP), web-browser software, and a telephony provider. The "personal computer" is typically an amalgam created by hundreds of software and hardware vendors. A corporate computer communication network is typically a bewildering organism cobbled together from a vast array of products and services, most of which, in turn, include hundreds of components. The supply and service chains around the "automobile," as whole product, span the globe and typically encompass thousands of companies. Efficiency often demands specialization. Specialization typically requires complexity.

For a whole product to succeed in the marketplace, the buyer must usually be shielded from the complexity underlying its creation. In the brick and mortar world, a vast supply chain was typically hidden from the user via the local dealer. No matter what causes a car to break down, the driver calls the same place: the car dealer. But e-business is typically about disintermediation-to avoid or decrease the overhead cost of a local physical presence. So, on the phone or online, e-business customers struggle to find a source for help. Contending with their own inability to match their problem to the responsible supplier and encountering a maze of contractual interrelationships that blur discernable ownership, the customer may become increasingly frustrated. Studies show that only 42% of customers find what they are looking for online. Only three in ten search engine-driven interactions end in success.

E-commerce retailers ("e-Tailers") have learned the hard way that their customers typically regard their whole product as including shipping and support. In failing to provide effective service at the whole product level, many e-Tailers (electronic commerce retailers) have bankrupted themselves. E-business in general faces a similar fate absent an effective model of whole product support. When customer support ends at the enterprise boundary, the user is the short-term loser. But, in the long run, the enterprises' customer relationships are at stake.

One solution to the whole product support problem is distributed CRM. Delivered through either a consortia of key companies, or through the auspices of an "anchor" enterprise, establishment of distributed CRM may offer, by way of example, but not by way of limitation: (a) a "context provider" willing and able to sponsor the distributed CRM; (b) a "community" of enterprise-created web services; (c) an automated platform able to seamlessly route customers to the appropriate web service registered in the distributed CRM community based on the customer's problem and relationships; and (d) participation in the distributed CRM community by both "anchor enterprises" and "ancillary" enterprises.

In one example, the context provider is a particular enterprise, organization, or entity that defines the scope, rules, and standards of the community, or otherwise serves as its "host." A context provider may be a dominant enterprise within a value chain (e.g., Cisco Systems), a standards alliance (e.g., the Customer Support Consortium), or an organization emerging from a contractual partnership (e.g., suppose Microsoft and Compaq form a support organization). A context provider is typically able to control both customer and enterprise access to the distributed CRM community. Although, in one example, selecting a single context provider offers a single point of coherent-decision making, an alternative example permits multiple context providers.

In one example, the community provides an aggregation of Web services sufficient to provide robust customer care for a whole product. Examples of Web services may include, without limitation: content repositories, web-based chat, configuration applications, and download services. In one example, the web services an online solution packaged with metadata understandable to the primary content provider or other automated platform.

In one example, the automated CRM content provider provides automated customer support that interacts, personalizes, and escalates customer problems before a service representative becomes involved. Although an enterprise content provider may focus on the support to be delivered by a single company, a distributed CRM system's automated content provider may be used to provide a portal for supporting a whole product - enabling seamless service and support across many (perhaps hundreds) of individual enterprises.

Affinity or anchor enterprises are, in one example, the companies that have direct relationships with the buyers/users of the whole product. In this example, secondary or ancillary enterprises may have a key role in constructing or selling the product, but they are typically not where the customer goes for service and support. For example, in the PC world, Dell, Compaq and Microsoft may be regarded as anchor enterprises. However, Intel and Seagate are typically not so regarded. Participation of a reasonable percentage of the anchor enterprises enhances the chance for a distributed CRM system to succeed.

As an illustrative example of how customers view distributed CRM, suppose that a customer buys a whole product. Then the product breaks. The customer will, in almost every situation, perceive one or two core relationships around the whole product. For example, a PC user naturally associates most strongly with the PC manufacturer-such as a Dell, Compaq, or Hewlett Packard ("HP"). Depending upon the symptomology and circumstances, the customer may additionally associate the problem with some other significant vendor within the supply chain of the product. In our PC example, Microsoft (around problems that are purely software related) may be the initial touchpoint, or Epson (if an attached printer isn't functioning). These natural proclivities around where to seek service and support are typically a direct function of the branding associated with the whole product. They reflect the customer's view of value. The customer should not be forced to deeply ponder the right point of support. The enterprise that comes to the user's mind when a problem occurs can be regarded as having invested deeply to be in the privileged position of handling the customer touchpoint. In short, the customer should be able to reach out for service to whatever specific enterprise leaps to mind. In buying the whole product, the customer desires to go directly to the core seller and get help. The initial point of contact may be referred to as the customer's "affinity relationship."

When the customer seeks service at a specific enterprise's web site, and that enterprise is part of a distributed CRM system, interaction with the distributed CRM system begins. In one example, the distributed CRM system first performs an interactive triage dialog for isolating the trouble source. As with all good service, this automated conversation is, in this example, personalized. In one example, such personalization reflects the user's expertise, learning style, and attitude.

Based on this initial triage, the distributed CRM system, in one example, completes the diagnostic interaction and provides an answer. In another example, the affinity enterprise's content provider routes the user to a content provider maintained by an anchor tenant in the distributed CRM system. In another example, the affinity enterprise's content provider sends the user to a web site maintained by one of the distributed CRM system tenants. In another example, the affinity enterprise's content provider provides the customer with a "trouble ticket" and escalates the customer to an offline customer service center offering a human customer service representative providing assistance, such as in-person or over the telephone. In one embodiment, the trouble ticket includes some or all diagnostic or other session context information that has already accrued during the customer's interaction session with the automated CRM content provider. In another example, the user's interaction with the automated CRM content provider opens an interactive chat with a technical representative working for one of the distributed CRM enterprises. In one embodiment, opening the interactive chat session provides the technical representative diagnostic or other session context information that has already accrued during the customer's interaction session with the automated CRM content provider. In another example, the automated content provider routes the user to an automated or human support point within the distributed CRM system that is unaffiliated with a specific enterprise but willing to provide technical support.

In the above example, the customer experiences the service interaction as a single touchpoint beginning with the affinity vendor. When the user actually enters the distributed CRM system at the affinity enterprise's automated content provider, which is linked to different enterprises, obtaining help across the distributed CRM system is painless. In many cases, however, the distributed CRM system offers advantages beyond being an umbrella over separate enterprise support systems. For example, when the true nature of the customer's problem, and the actual location of a solution, does not emerge from an initial triage, the customer may be sent to an automated content provider or human customer service center help across enterprises.

Thus, in the above example of a distributed CRM system, customers wind through an interactive dialog, for example, interacting with the affinity enterprise's automated CRM content provider, and possibly then interacting with one or more other enterprise's automated CRM content providers. Without having to renew a session, repeat answers, or even understand why the problem is being forwarded from entity to entity, the customer travels through the virtual service environment. Instead of getting caught in telephonic Catch 22s, or randomly surfing from one enterprise's web site to the next, the distributed CRM system example discussed above permits the customer to be escalated, under the branding umbrella of the affinity enterprise, to the right person or place for an answer.

As an illustrative example of how the distributed CRM system is viewed by participating anchor enterprises, consider that these anchors typically control the brands that define the customer's perception of the whole product. As the 800 pound gorillas that control the customer relationship, anchors may assume several important roles in the distributed CRM system. In one example, an anchor serves as a point of entry or affinity enterprise. As an illustration, Dell PC buyers will likely contact Dell.com most of the time, Microsoft.com occasionally, Epson.com rarely, and Intel.com almost never. Anchor enterprises typically place great importance on providing great customer service because their brand is at stake. As the affinity enterprise for a whole product, an anchor enterprise typically contributes significant content to the distributed CRM system, such as using a dialog-driven concept-organized automated CRM content provider.

Distributed CRM assists anchor enterprises in several respects. Among other things, distributed CRM enables customers to get help from any of the participating enterprises without dissipating the anchor's core relationship with the customer. It also facilitates service consistent with the anchor enterprise's outsourcing, sub-contracting and alliance decisions. In another example, distributed CRM integrates seamlessly with the anchor enterprise's existing customer service framework. Distributed CRM promotes and enhances the anchor's relationship with the customer.

As an illustrative example of how distributed CRM serves participating nonanchor "tenant" enterprises, consider that one goal of such tenant enterprises is to ensure great service around the whole products on which the tenant enterprise's livelihood depend. With few exceptions, Dell's suppliers do not want-and cannot have-mindshare at the individual user level. Yet, customer satisfaction with the whole product may depend upon a user getting the right answer that can only be provided by a tenant enterprise. Rather than maintaining a full-blown separate dialog-driven concept-organized automated content provider and attempting to handle such customer service directly, the distributed CRM architecture smaller participants, such as tenant enterprises, to simply feed content into a dialog-driven concept-organized automated content provider hosted by an anchor enterprise or other participating entity in the distributed CRM system. In this way, merely by publishing content consistent with any standards imposed by the distributed CRM system (e.g., using standards under development in organizations like the Virtual Support Communities Working Group of the Customer Support Consortium or other suitable standards), the tenant can fulfill support obligations to the customer and to the whole product's supply chain.

Whole product service could also be delivered in other ways. One alternative example is a branded mediator. In this example, enterprises delivering a whole product could subcontract service to an independent web site or portal, and try to drive customer traffic to this location. In one example, the branded mediator hosts the primary content provider of the distributed CRM system discussed above. In this example, however, the whole product's anchor enterprises typically surrender their customer relationship to a third party. One result is building someone else's brand when the anchor enterprise has presumably worked hard to create its own brand. Therefore, the anchor enterprise may risk their brand loyalty by surrendering service and support. Moreover, consumers similarly typically surrender the security implicit in dealing with a company they know. In this example, consumers receive, or at least perceive, their customer service as being disconnected from their purchase source.

In another example, whole product partners band together to create a monolithic "non-profit" support location. In one example, this support organization hosts the primary content provider of the distributed CRM system discussed above. In one illustrative example, a community of enterprises around a personal computer ("PC") product creates an automated customer service CRM provider (e.g., "PCHelp.com") and a human-staffed CRM call center (e.g., "1-800-PCHELP"). However, this results in participating enterprises investing in a brand that may not be directly associated with the whole product itself. Moreover, in this model, customers are left patronizing a shadow entity. Furthermore, it may be difficult to wean customers from reaching out to the brand name on the box in which they purchased the whole product.

In one example, distributed CRM provides seamless escalation to an appropriate entity's automated or human-staffed CRM content provider, without requiring significant cross-enterprise coordination. In one embodiment, this result is obtained at least in part by using a knowledge map as illustrated in Figure 4. In this example, organizing content along multiple independent dimensions into a set of taxonomies obtains a resulting "roadmap" that is capable of effectively linking customer queries to documents created or managed by a particular business enterprise. A knowledge map provides a high level model of the fundamental concepts that define a particular service area. As described in this document, the advantages of using a concept-organized content provider apply to a single enterprise, and can be expanded to multiple enterprises or other entities using a distributed CRM approach.

One problem that companies typically face in banding together to provide seamless service is that each enterprise typically maintains its content in different formats, employing different vocabularies, and relying on different conceptual and metadata schemas. Such natural, deeply embedded incompatibilities are obstacles to providing integrated customer service. Using a knowledge map, however, substantially solves the "Tower of Babel" incompatibility problem. Moreover, the autocontextualization discussed or incorporated herein allows content in almost any format to be easily digested. Furthermore, the text classification or "document tagging" techniques discussed or incorporated herein enables the construction of statistical webs that automatically link documents appropriate parts of the knowledge map. As a result, a concept-organized content provider using such techniques effectively serves as an economical bridge between knowledge bases of different enterprises or other entities.

For example, suppose a Dell PC user gets an error message while printing. The problem could be related to either the hardware or the operating system. At the affinity enterprise CRM content provider hosted by Dell, a knowledge map includes, among other things, classification dimensions describing printer symptoms, printer activities, printer vendors, and operating system versions, with various concepts in the various classification dimensions. A dialog between the customer and the Dell CRM content provider establishes that the user had an HP printer and was running Microsoft's Windows 98 operating system. The HP printer concept in the Dell CRM content provider's knowledge map would be designated an exit node in that it would include a trigger escalating or transferring the session to the HP CRM content provider. Similarly, in the "operating systems" dimension of the Dell content provider's knowledge map, the Microsoft Windows 98 concept would be designated an exit node in that it would include a trigger escalating or transferring the session to the Microsoft CRM content provider.

In this example, the Dell CRM content provider would transfer the interaction to one of the two sites (HP or Microsoft), along with the session context collected during any dialog to that point. In one embodiment, the choice of which site to which the session is transferred is based at least in part on past experience with similar users (for whom successful or nonsuccessful service interactions can be inferred as described or incorporated elsewhere in this document). For example, if hardware problems more frequently cause such error messages, then the user session would be forwarded to the HP CRM content provider. In this example, the HP CRM content provider picks up the dialog process and either provides the customer with an answer (e.g., through the Dell CRM content provider with Dell or dual branding) or determines that the problem is out of HP's area. If the problem is out of HP's area, the HP CRM content provider and would so indicate by providing the appropriate response information to the Dell CRM content provider, along with any additional session context that accrued during the interaction with the HP CRM content provider. In that case, the Dell CRM content provider then forwards the user session to the Microsoft CRM content provider, which would guide the user through an interaction session around Windows 98 printing problems.

By building a community wide knowledge map spanning the issues associated with the whole product (either as an integrated single knowledge map or as linked but separate discrete knowledge maps associated with particular enterprises), a concept-organized CRM content provider seamlessly melds disconnected content sets into a logical whole. This is possible because, among other things, the distributed CRM is organized around a particular unified product. As a result, the knowledge maps built for each enterprise participating in the whole product's customer service community are capable of being naturally linked.

In one example, distributed CRM provides dynamic construction of the "right" brand. Dialog, personalization, and escalation usually indicate great automated customer service. Distributed CRM allows the brand communicated to the user to be dynamically constructed based on, for example, who the customer is, which entity's content provider is currently interacting with the customer, and/or the affinity enterprise associated with the user's particular point of entry. Distributed CRM can dynamically adjust the user interface to provide co-branding, or other branding, as business rules and/or other circumstances dictate. For example, if the user initiates service on the Dell CRM content provider site, in one embodiment, the Dell brand continues to persist on the user interface display throughout the service session even as escalation occurs to a printer enterprise's CRM content provider site, a graphics software CRM content provider's site and back again to the Dell CRM content provider site.

In another example, distributed CRM provides a metric of the customer experience. In one example, during each automated user interaction session, the primary CRM content provider analyzes a customer's initial query and then accumulates session context, such as by asking pertinent follow-up questions. The distributed CRM system, in this example, expands and builds on a customer's input until enough is known to deliver a relevant answer. The primary CRM content provider includes a session log, stored in computer memory, that records all or important aspects of the user's session. The recorded information associated with the dialog generates deep feedback in context, allowing improved customer relationship reporting and analysis.

One example of the types of customer relationship reporting provided by the distributed CRM system described herein includes service improvement reports. Reports about the current quality of service facilitate continuous improvement in providing automated CRM. In one example, primary CRM content provider 405A includes report capabilities as described in commonly assigned Kay et al. U.S. Patent Application Serial No. 09/911,839 entitled, "SYSTEM AND METHOD FOR MEASURING THE QUALITY OF INFORMATION RETRIEVAL," filed on July 23, 2001, which is incorporated by reference herein in its entirety, including its description of providing reporting information about user interactions. In a distributed CRM application, however, such reporting is provided, in one example, for the individual content providers **405A-N** associated with different enterprises or other business entities and, in another example, aggregated over multiple (or all) content providers **405A-N**. In a third example, both individualized and aggregated reporting are provided, thereby allowing comparison of an individual content provider to all or similar other content providers. Providing reports particular to a particular enterprise's content provider site enables the site administrator to pinpoint any weak spots in taxonomies (or other classifications), dialog, and autocontextualization (e.g., of documents-to-concepts or of dialog-to-concepts). Such reports allow customer experience managers to manufacture systematic improvement in the knowledge architecture.

One example of such reports includes content utilization reports. Such reporting on customer utilization of documents, and on the distribution of user queries in relationship to content enables content administrators to precisely target the creation of new content to match user demand. Such reporting also indicates the relationship of document access to user satisfaction (e.g., whether it can be inferred that the user's query has been satisfied by the returned document). This helps identify ineffective content or, when coupled with user attributes (e.g., the user's experience level), it helps identify which user segments may be ill-equipped to use the available documentation.

Another example of such reports includes management information reports. For example, by categorizing each user query from multiple perspectives, such reporting provides a new window on customer issues and needs. In one example, it identifies which products in a company's product line are proving difficult to install. In another example, it identifies which products are generating service requests from experienced vs. inexperienced users. In a further example, it identifies, within a given product, what activities or tasks are causing service requests from users. Analysis of session context data from the primary content provider **405**, therefore, yields amazing information about what aspects of the enterprise's product line are service issues, and what is and is not working for the customer. Moreover, the distribution of CRM content across different content providers hosted by different entities inherently reflects the associated business relationships involved in the whole product being serviced. Therefore, distributed CRM reporting, segregated into or aggregated across such entities, or both, provides an effective indication of, among other things, which business relationships should be modified, where customer service needs to be improved, etc.

In another example, the primary content provider **405A** hosted by the affinity enterprise collects login information from user **105**. In this example, primary content provider **405A** generates individual customer profiles that substantially improve and extend traditional customer databases. Although standard CRM systems may include demographic data and transactional information, they tend to have little information on the customer's interests, learning orientation, and goals. In distributed CRM system **400**, however, session context generated during the user's session provides such information about customers, including how the customer relates to the various different entities providing customer service via the distributed CRM system **400**. Moreover, in one example, such customer information from the distributed CRM system **400** is merged with existing customer data of the affinity or other participating enterprises. This enhances the ability of an enterprise to build lasting, loyal and profitable relationships with each customer.

In another example, distributed CRM system **400** provides billing across enterprises. As discussed above, the session context information of a particular user's interaction session tracks each enterprise's content provider that serves as a customer touchpoint during the user session. Reporting of such enterprise touchpoints supports a billing process that reflects the complexity of the business relationships between the enterprises. As enterprises participating in the distributed CRM system subcontract service and negotiate cost allocations, the distributed CRM system tracks usage of the various enterprise's content providers, which are useful in handling the consequent billing and accounting issues.

In one example, distributed CRM system **400** provides a conversational model, such as for marketing, sales, and/or support. When a customer places a telephone call to a human-staffed CRM call center, or visits a branch office of the enterprise, the enterprise's employee largely shapes the customer experience. If the customer service representative is friendly, knowledgeable, and articulate, the customer will usually have a good user experience. For automated CRM, however, the technology largely defines the user experience. In one example, the distributed CRM system **400** provides a good user experience by, among other things, using the dialog, personalization, answering, and/or escalation described above. In one example, providing dialog respects the conventions of human interaction, provides the customer with ongoing feedback during the customer's session, provides one or more escape hatches (e.g., from the automated distributed CRM system to an appropriate customer service representative in one of the participating enterprises) if the user's frustration begins to build.

In one example, distributed CRM system **400** provides substantially automated, non-duplicative content management. As discussed above, this includes the above-described and above-incorporated autocontextualization of documents to concepts. Such autocontextualization can be conceptualized as taking blobs of English text from documents and mapping the text to appropriate categories, buckets, or concepts within a conversational knowledge map. This effectively mimics the human capability to read a document and then summarize its key points. Consequently, in one example, autocontextualization transforms text from a blob in a document into a structured record retrievable using automatically derived metadata indicating what the document is about. Autocontextualization substantially automates the flow of content from inside an enterprise to the end user. Because documents in almost all standard formats can be substantially automatically injected into the distributed CRM without substantial effort and overhead, the tasks of content creation and management can be more easily distributed across the participating enterprises. Secondary or tenant enterprises find it easier to participate in the distributed CRM system, because the burden of participation is greatly reduced using the autocontextualization and other techniques described or incorporated herein.

In one example, distributed CRM system **400** provides escalation from a particular content provider to people (e.g., a customer service representative associated with the same or another enterprise), other automated content providers (such as the concept-organized content providers discussed above), or to other web sites hosted by enterprises that may or may not be direct participants in the automated distributed CRM system **400.** Of course, more human involvement typically requires higher cost to an enterprise and its customer. Recognizing this, the distributed CRM system 400 provides what can be conceptualized as an automated smart service receptionist that escalates customers to the appropriate level of service (e.g., automated CRM, human-staffed CRM call center, etc.) delivery and/or the appropriate resource within the level of service (e.g., the appropriate enterprise, a particular human customer service representative, etc.). In one example, such escalation is triggered as a function of the considerable session context that accrues with the accompanying dialog. In one example, such escalation is triggered when the dialog becomes bogged down, terminates without providing the user a solution, or when it perceives that the user has become frustrated. In one example, such escalation is to a human customer service representative, for example using network-enabled interactive chat software such as FACETIME (FaceTime Communications, Inc., Foster City, CA) and WEBLINE (Webline Communications Corp., Burlington, MA) or using Front Office solutions such as available from Siebel Systems, Inc. (San Mateo, CA) and Clarify, Inc. (San Jose, CA).

Because distributed CRM can be conceptualized as being organized expressly around the customer, it creates a customer experience that, in one example, includes those enterprises that participate in the manufacture and support of a whole product. To deliver a great customer experience, distributed CRM is linked, in one example, with a primary content provider or other intelligent "nerve center" that automatically carries on a dialog with each customer, and routes that user to the appropriate entity for receiving assistance. A concept-organized content provider is one example of a content provider that fulfills this need. In one example, the distributed CRM system includes multiple such concept-organized content providers, each hosted by an enterprise within a consortium. In one example, the various enterprises cooperate by defining messaging standards and business rules for escalating to content providers hosted by other enterprises. This allows an anchor enterprise to create a seamless environment for customer support across its shared whole product, without massive investment in new processes, new content, and/or new branding. Moreover, distributed CRM provides, among other things, a customer support environment that reflects the customer's needs. In one implementation, it provides a single obvious point of contact for a customer, regardless of where the actual content is being created or managed within across the community of enterprises participating in the distributed CRM system. This decreases cost and increases customer satisfaction for a particular enterprise and, for all participating enterprises.

### Other Examples of Advantages or Variations of a Distributed CRM System

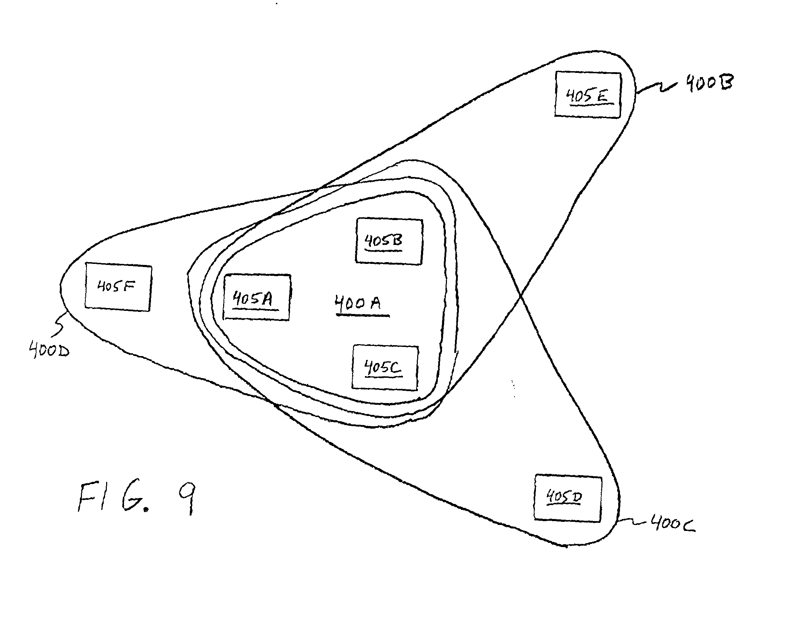

Figure **9** is a block diagram illustrating generally one example in which the distributed CRM system **400** is expanded into multiple distributed CRM systems **400A, 400B,**..., **400N,** and in which a particular entity's content provider **405** participates, if needed, in more than one distributed CRM system **400A-N**. In the example of Figure **6**, distributed CRM system **400A** includes networked content providers **405A, 405B,** and **405C,** each associated with a different enterprise (or other entity). Similarly, distributed CRM system **400B** includes content providers **405A, 405B, 405C,** and **405E,** distributed CRM system **400C** includes content providers **405A, 405B, 405C,** and **405D,** and distributed CRM system **400D** includes content providers **405A, 405B, 405C,** and **405F.** A content provider **405A**N may constitute a primary content provider (serving as the user's initial point of entry) hosted by an affinity or "anchor" enterprise (at least with respect to a particular product), or may constitute a secondary content provider hosted by a secondary or "tenant" enterprise (with respect to that product). A particular content provider **405A-N** may also serve as a primary content provider for certain product(s) and as a secondary content provider for other product(s).

The ability to participate in multiple distributed CRM systems **400A-N** represents one manifestation of the value of network effects obtainable using distributed CRM. By providing such content providers with interfaces **500A-B** accessible by other content providers, and connecting such networked content providers into a distributed CRM system **400**, those networked content providers present increased value (e.g., more content and distributed management of the same) to other enterprises tasked with providing CRM. Such other enterprises can make use of the existing content providers of enterprises already associated with one or more distributed CRM systems **400**. By outsourcing content creation and management to component vendors or other enterprises most capable of performing such functions, distributed CRM enhances the agility of an affinity or anchor enterprise. In another example, distributed CRM allows a user to access content created by another user (e.g., via a threaded or other user discussion or chat site), even though that other user accesses the distributed CRM through a different affinity enterprise. In one illustrative example, a Dell PC user contributes (using the Dell content provider as an initial access point) content to a Microsoft operating system discussion site (managed by a Microsoft content provider). A Compaq PC user accesses such content using a Compaq content provider as an initial access point. And, in a further example, the Compaq enterprise is able to learn more about the needs of its user and how those needs relate to customers of other enterprises, such as by using session context information accrued by the Compaq PC user's visit to the Microsoft content provider.

Some benefits of distributed CRM to customers include, by way of example, but not by way of limitation: (1) the customer is guided to needed information regardless of the particular customer's initial point of contact, which may vary depending on the perceptions or viewpoints of particular customers; (2) results from multiple content providers are, in one example, provided to the customer via the primary content provider, which enables the results to be presented in an integrated fashion; (3) portions of the user's session context and/or portions of a particular enterprise's customer profile information may be used to provide a personalized interaction experience for the customer, even as aspects of the user's session are being transferred to other content providers hosted by other enterprises; and (4) user-provider dialog creates session context that is used to assist either the primary content provider or any of the secondary content providers in focusing the information provided to the customer to more closely reflect the customer's needs.

Some benefits of distributed CRM to participating enterprises or other entities include, by way of example, but not by way of limitation: (1) access to content created and/or managed by other participating enterprises; (2) access to session context pertaining to a user's interaction with another entity's content provider; (3) integration of results from multiple enterprises, providing consistent presentation to the customer; (4) logging of session context into a customer database, including across enterprises, allowing a better understanding of customer service issues as they pertain to the business relationships between the enterprises; (5) automated user-provider dialog provides inexpensive, yet effective, customer assistance; (6) routing a user's session to the appropriate entity's content provider provides inexpensive, effective, and appropriate resource utilization; (7) routing of customer service is in accordance with relationships between enterprises; (8) analytics and reporting are available, if desired, to all participating enterprises; (9) preservation of branding of the affinity enterprises or provision of co-branding of the affinity enterprises with other participating enterprise(s); (10) distributed autocontextualization of documents (e.g., performed at the particular participating enterprise that creates and/or manages the documents) allows the various enterprises to effectively and inexpensively keep up with rapid changes in content that are typically present in high-technology and many other applications, and allows additional enterprises to be incorporated into the distributed CRM system as such enterprises become involved with providing components or adding value to the whole product (i.e., scalability); (11) where applicable, enterprises share or adopt standardized representations of applicable portions of their knowledge maps (e.g., taxonomies, concept nodes, etc.) or portions thereof.

This distributed CRM discussed in this document provides, among other things, by way of example, and not by way of limitation: (1) scalability, allowing additional enterprises or other entities to be later added or changed, as then-existing business relationships dictate; (2) standardization at a level that allows various enterprises to participate (benefiting from distributed content creation and/or management and cross-enterprise analytics and reporting) yet providing enough independence and autonomy to enable a particular enterprise to successfully create and manage content pertaining to that enterprise; (3) focus on a whole product (or value-added to a product), where the level of participation of each enterprise naturally tends to reflect its stake in the product. Although, in one example, a particular distributed CRM system **400** has predefined boundaries, in another example, the boundaries of a particular distributed CRM system **400** are, at least to some extent, self-defining by each enterprise, which determines those other enterprises with which it will interact. A particular distributed CRM system **400** is organized as, by way of example, but not by way of limitation, a "value chain" around a whole product, as an alliance between enterprises providing different products that are often used together, or a value-added aggregation, by an affinity enterprise, of various products provided by other enterprises (e.g., an e-commerce retailer).

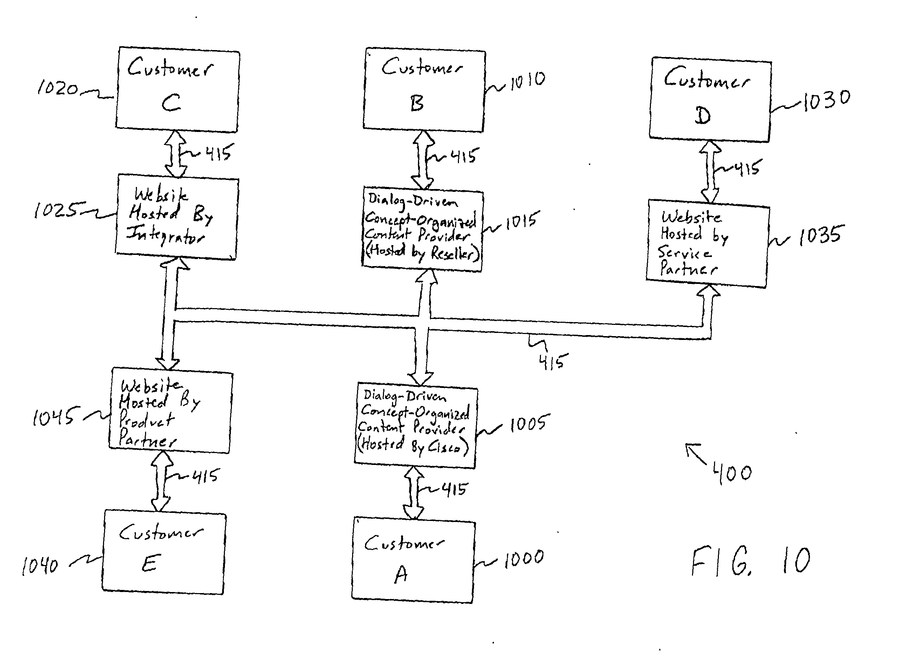

Figure **10** is a block diagram illustrating generally one example of a distributed CRM system **400** organized as a "value chain" around a whole product. In this illustrative example, the "value chain" is centered around a networking product manufactured by, for example, Cisco Systems, Inc. ("Cisco"). In this example, Customer A **1000** buys its networking product directly from the manufacturer, Cisco, which hosts a website-based dialog-driven concept-organized CRM content provider **1005,** as discussed above. Customer B **1010** buys its product through a Cisco-authorized reseller, which hosts a website-based dialog-driven concept-organized content provider **1015**. Customer C **1020** buys its networking product from a product integrator, which hosts a website-based CRM content provider **1025** (not necessarily dialog-driven or concept-organized). Customer D **1030** buys its networking product from an enterprise other than the Cisco-authorized service partner hosting a website-based CRM content provider **1025** (not necessarily dialog-driven or concept-organized). However, Customer D **1030** has purchased a service contract with the service partner, and therefore will seek support at the service partner's CRM content provider **1025**. Customer E **1040** buys its networking product from a Cisco product partner, which hosts a website-based CRM content provider **1045** (not necessarily dialog-driven or concept-organized).

In the distributed CRM system **400** of Figure **10**, Cisco's CRM content provider **1005** serves as an initial point of contact for Customer A **1000**. However, Cisco's CRM content provider **1005** also provides Customer A **1000** access to the website **1035** hosted by the Cisco service partner, and, in one example, to a human customer service representative at the Service Partner's call center, such as using an escalation link connector, as discussed above, passing XML or other session context accrued up to that point by Cisco's CRM content provider **1005**. The dialog between Customer A **1000** and Cisco's CRM content provider **1005** may also trigger, for example, a search link connector or a content link connector to information at the website hosted by the Cisco product partner **1045**.

In this example, Customer B **1010** has, as an initial point of contact, the Reseller through which Customer B **1010** purchased Cisco products. The dialog-driven concept-organized content provider **1015** hosted by the Reseller provides, under its own branding, its own content (if any) together with content managed by the Cisco dialog-driven concept-organized CRM content provider **1005**, using an application link connector such as discussed above with respect to Figure **5**. The Reseller can fold its own specific content and services into their customers' user experience, while passing the user session and dialog to continue with the Cisco CRM content provider **1005**, if appropriate. This allows the Reseller to retain its branded experience, yet leverage the full content of the Cisco CRM content provider **1005**, or only that content of the Cisco CRM content provider **1005** that pertains to the particular Cisco products carried by the Reseller. The Reseller controls, if desired, which issues are escalated to the Reseller. In addition, the Reseller controls, if desired, which issues are passed to the Cisco CRM content provider **1005**, or which issues are in turn escalated to the Cisco CRM content provider **1005** by the Reseller's human customer service representatives. When necessary, a customer's user session automatically passes to the Cisco CRM content provider **1005** to handle certain more complex questions about the functionality and support of Cisco products.

In Figure **10**, Customer C **1020** has, as an initial point of contact, a systems integrator that integrates the Cisco networking product with a telecommunications equipment product of the Cisco Product Partner (e.g., Nortel Networks). In this example, the CRM content provider website hosted by the Integrator **1025** includes a call to Cisco's dialog-driven concept-organized CRM content provider **1005** (e.g., a call into a particular dialog state or a call specifying particular user query) to retrieve content managed by Cisco. The CRM content provider website hosted by the Integrator **1025** also includes a call to the Product Partner's website CRM content provider **1045**.

In Figure **10**, Customer D **1030** has, as an initial point of contact, a customer service representative or the website CRM content provider hosted by the Service Provider **1035**. In one example, the Service Provider's customer service representatives, in responding to user inquiries, utilize Cisco's dialog-driven concept-organized CRM content provider **1005** to help diagnose and resolve problems. Similarly, the website CRM content provider hosted by the Service Provider **1035** includes a call to Cisco's dialog-driven concept-organized CRM content provider **1005** (e.g., a call into a particular dialog state or a call specifying particular user query) to retrieve content managed by Cisco. These techniques allow the Service Provider to leverage content managed by Cisco, while retaining their branding for those users regarding Service Provider as their affinity enterprise.

In Figure **10**, Customer E **1040** has, as an initial point of contact, the website CRM content provider hosted by Cisco's Product Partner **1045** (e.g., Nortel), which includes one or more links to the Cisco dialog-driven concept-organized CRM content provider **1005**. Such a linkage is capable of providing just-in-time information relevant to multi-vendor issues between the two products. The Product Partner can link both its direct customers (e.g., Customer E **1040**) and other customers of its product (e.g., Customer C **1020**) to Cisco-managed content. These other customers of its product (e.g., Customer C **1020**) are linked indirectly to the Cisco CRM content provider **1005**, via the Product Partner's website CRM content provider **1045**, or directly linked to the Cisco CRM content provider **1005**, without the Product Partner's website CRM content provider **1045** as an intermediary.

In the example of Figure **10**, Cisco benefits from the distributed CRM system **400** organized as a value-chain in several ways. By way of example, but not by way of limitation, distributed CRM provides Cisco with benefits of both direct and indirect customer relationships, as desired. Moreover, the distributed CRM architecture tends to increase each customer's loyalty to that customer's affinity enterprise. The participating enterprises can use the distributed CRM system to obtain call avoidance; deflecting calls to their customer service representatives to appropriate automated CRM content, the creation and management of which is sensibly distributed across the various enterprises. The customers are moved toward a Cisco solution to their problem from their initial point of entry, which provides session context or other insight into the customer's needs. Distributed CRM is particularly well-suited for a high-technology industry that relies on acquisition of other enterprises or partnering with other enterprises, for which distributed creation and management of content is typically much more feasible than centralized creation and management of content. Cisco can more widely disseminate its content and its branding (e.g., via co-branding with the enterprise serving as the user's initial point of contact). Cisco can capture additional knowledge about customers, from their initial point of entry, or any other session context that has accumulated before the user session reaches the Cisco CRM content provider. Moreover, Cisco provide a more consistent user experience for customers, regardless of their initial point of entry into the distributed CRM system **400**, since the Cisco-managed content may be made accessible to all such customers.

The other enterprises participating in the value chain distributed CRM system **400** of Figure **10** also obtain advantages. By way of example, but not by way of limitation, these other enterprises can control (e.g., withhold) certain information (e.g., customer information) that the enterprise may not want to share with Cisco or the other participating enterprises. The affinity enterprise can also direct its customers toward its content, or toward content provided by specific partnering enterprises, instead of (or before) directing the customer toward Cisco content. Distributed CRM allows these other enterprises to provide their customers with comprehensive content and service beyond what would otherwise be available from a local site not participating in distributed CRM system **400**. The participating enterprises also obtain information by interacting directly with their customers; such information would not be available if their customers interacted directly with Cisco, bypassing that participating enterprise. Participation in distributed CRM system **400** should provide an enterprise with reduced support costs, and scalable and maintainable CRM content.

Moreover, the other enterprises participating in the value chain distributed CRM system **400** of Figure **10** also benefit from the above-described or incorporated reporting and analytics provided by an upstream-entity in the value chain (such as Cisco, in this example). In various configurations, the Cisco-provided reporting and analytics is either individualized for a particular other entity (such as Reseller **1015**, in this example), aggregated across several other entities (such as Reseller **1015** and other Resellers, or Reseller **1015** and Integrator **1025**, etc., in this example), or both individualized and aggregated, so that a particular entity can compare their data to other entities' data. For example, Reseller **1015** may contract to receive only reports on traffic that came through the website operated by Reseller **1015**. Alternatively, Reseller **1015** may contract to receive baseline numbers for site metrics (e.g., success rate, product interest areas, etc.) derived for all other Resellers enrolled in distributed CRM system **400**, or for other enrolled Resellers that fall within a particular market segment (e.g., Resellers focusing on a particular vertical industry, or those within a particular geographic region, or those having a similar-sized business, etc.). This provides a downstream entity in a value chain to receive reporting benefits provided by an upstream entity, as well as benchmarking and comparison information from other entities that are similarly situated in one or more respects to the downstream entity.

In the example of Figure **10**, customers also obtain certain benefits by accessing the distributed CRM system **400** through their affinity enterprise rather than directly contacting Cisco. By way of example, but not by way of limitation, the customer obtains the personalization available from their affinity enterprise. For example, the integrator would presumably have specific useful information about the customer's use and deployment of the Cisco product, and could orient the user's session accordingly. The customer also obtains visibility into a broader range of add-on services and products, beyond that offered by the affinity enterprise (e.g., integrator or reseller). In one example, the affinity enterprise equips its automated CRM content provider with an escalation link (as discussed above) to the affinity enterprise's human customer service representative. This allows the customer to interact with a customer service representative that is familiar with that customer's use and deployment of the Cisco product.

In another configuration, distributed CRM is organized around an alliance between enterprises vending different products that may be used together, or have a common application supporting an alliance between the enterprises. In an alliance, participating enterprises may have intersecting business interests and/or multiple roles in a common area of business focus. One such example of an alliance is in the WinTel area (i.e., Microsoft "WINdows" operating systems, and personal computers (e.g., Compaq, Dell, or other PCs) based around the "InTEL" microprocessors). In the WinTel Area, Microsoft's interests and roles range from competitor (for software applications), to component provider (for "WINDOWS" operating systems) as an OEM for PC vendors, to primary or secondary CRM support provider. Depending on who the customer is, what relationships exist between the enterprises, and what products are required, alliance members interact together in different ways.

In one example, distributed CRM is implemented using multiple different connector links between enterprises, to reflect the different ways in which these enterprises interact with each other in different situations. In one example, the connector links are configured allow the two enterprises to together provide a common service. In another example, the connector links are configured to allow each of the two enterprises to individually provide service to a common customer of both enterprises.

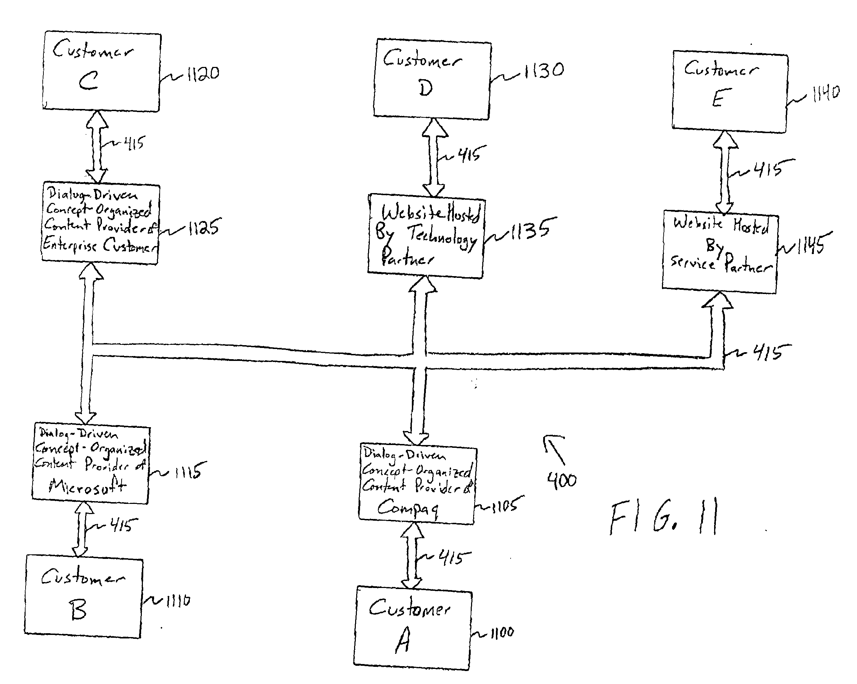

Figure **11** is a block diagram illustrating generally one example of a distributed CRM system **400** organized as a support alliance. In this illustrative example, the support alliance is centered around two enterprises: Microsoft Corp. ("Microsoft") and Compaq Computer Corp. ("Compaq"), related primarily by Microsoft being an OEM of operating systems and application software to PC manufacturer Compaq. In this example, Customer A **1100** has, as its initial point of contact, Compaq's dialog-driven concept-organized CRM content provider **1105**. Customer B **1110** has, as its initial point of contact, Microsoft's dialog-driven concept-organized CRM content provider **1115**. Customer C **1120** has, as its initial point of contact, an enterprise customer's dialog-driven concept-organized CRM content provider **1125**. In one example, the enterprise customer is a large purchaser of PCs with Microsoft operating systems and applications programs (e.g., Boeing) that provides information systems (IS) support to its internal user community using dialog-driven concept-organized CRM content provider **1125.** Customer D **1130** has, as its initial point of contact, a website-based CRM content provider **1135** (not necessarily dialog-driven or concept-organized) of a technology partner enterprise (e.g., a video card manufacturer) participating in the distributed CRM system **400**. Customer E **1140** has, as its initial point of contact, a website-based CRM content provider **1045** (not necessarily dialog-driven or concept-organized) of a service provider enterprise participating in the distributed CRM system **400**.

In the example of Figure **11,** Microsoft creates and/or manages content at its content provider **1115,** and Compaq creates and/or manages content at its content provider **1105**. However, in one example, Microsoft and Compaq also share creation and/or management of content provided by one or both of their respective automated CRM content providers **1115** and **1105**. Shared information creation and/or management is useful for, among other things, shared business domains (e.g., Compaq PRESARIO computers running WINDOWS 2000 operating systems). This includes, among other things, shared documents, shared taxonomies, and/or shared high-level dialog paths.

In one example, Customer A **1100** has a problem with PRESARIO running WINDOWS, and contacts Compaq's CRM content provider **1105**. Compaq's CRM content provider **1105** uses the shared dialog and taxonomies to diagnose whether the problem is related to the hardware or the operating system. If the problem is hardware-related, Compaq content is returned to Customer A **1100.** If the problem is software-related, Microsoft content is returned to Customer A **1100** via Compaq's CRM content provider **1105.** Compaq retains its branding and relationship with Customer A **1100.** Microsoft achieves call deflection from customers who have purchased Compaq PCs and, therefore, use Compaq's CRM content provider **1105** as their initial point of contact.

In one example, the dialog also models specific business rules that enable escalation paths (i.e., transferring the user's session) at appropriate points in each customer situation. In cases where the customer encounters an extended dialog path pertaining to Compaq hardware issues, the Compaq dialog is in control of the user's session. In cases where a Microsoft software issue is uncovered, Compaq's CRM content provider **1105** either (1) call (with appropriate XML session context) the appropriate dialog state at Microsoft's CRM content provider **1115**, while continuing to act as an intermediary, (2) call (with appropriate XML session context) the appropriate dialog state at Microsoft's CRM content provider **1115**, and allow the user's session to continue directly between Microsoft's CRM content provider **1115** and Customer A **1100**, or (3) escalate Customer A **1100** to a live session with a Microsoft customer services representative, while providing the customer service representative with relevant session context that has accrued during the user's session.

In another example, Customer B **1110** has a problem with PRESARIO running WINDOWS, but contacts Microsoft's CRM content provider **1115**. For the shared Microsoft/Compaq content, Customer B **1110** will experience a similar combination of content or services. The entitlement privileges of Customer B **1110** (e.g., services for which Customer B **1110** has contracted), in one example, controls which other enterprises in the distributed CRM system **400** to which Customer B **1110** is permitted to link. For example, Customer B **1110** may have access to additional partner services that Microsoft has elected to provide as part of their CRM experience. In the example of Figure **10**, Microsoft and Compaq share common, but not exclusive, connections in the distributed CRM system **400**. In this way, each participant in the distributed CRM system **400** can define the range, priorities, and presentations of relationships with other enterprises with which they permit their customers to engage.

In the example of Figure **11**, Customer C **1120** is a Boeing user. An enterprise customer, such as Boeing, may have a size and level of relationship that demand a more extensive support arrangement and cooperation between Compaq and Microsoft. In this example, Boeing hosts a dialog-driven concept-organized content provider **1125** to assist its users such as Customer C **1120**. This permits Boeing to achieve integration with both Compaq and Microsoft and also provides a unified customer experience for Boeing's internal customer base. In one example, the Boeing IS help desk at Boeing provides appropriate front-end dialog that, when calling the Microsoft CRM content provider **1115** and/or Compaq content provider **1105**, restrict the search for relevant content to only that Microsoft and Compaq content that is relevant to Boeing users (for example, Boeing may only purchase one type of PC from Compaq; and by appropriate selection of called concept nodes at Compaq, can discriminate against content about other types of PCs).

In the example of Figure **11,** Customer D **1130** has, as an initial point of contact, a website hosted by a technology partner **1135** (e.g., a video card manufacturer), which is likely a relatively smaller player in the distributed CRM system **400**. If Customer D **1130** has a problem installing the video card on a Compaq PRESARIO PC, for example, then the video card manufacturer's website **1135** may link to the Compaq CRM content provider **1104** (with appropriate user query or other session context) for retrieving documents relevant to installing such a card on a PRESARIO PC. In this way, the technology partner can leverage content from Compaq and still preserve its branding and content.

In the example of Figure **11**, Customer E **1140** has, as an initial point of contact, a website hosted by a service provider **1145**. In one example, the Service Provider's customer service representatives, in responding to user inquiries, utilize Compaq's dialog-driven concept-organized CRM content provider **1105** to help diagnose and resolve problems. Similarly, the website CRM content provider hosted by the Service Provider **1145** includes a call to Compaq's dialog-driven concept-organized CRM content provider **1105** (e.g., a call into a particular dialog state or a call specifying particular user query) to retrieve content managed by Compaq. These techniques allow the Service Provider to leverage content managed by Compaq, while retaining their branding for those users regarding the Service Provider as their affinity enterprise.

In this example of a support alliance configuration of a distributed CRM system **400**, the participating enterprises benefit in several ways. By way of example, but not by way of limitation, each participant is able to retain a branded user experience for those customers who regard it as their affinity enterprise. Each participant is able to position how their customer is routed to other participants. Each participant is able to provide comprehensive service beyond what would be available from any single participant. All participants can obtain integrated reporting on customer issues and choices, and to obtain a specific profile of the joint issues in their market spaces. Customer service/support interactions are directed to the appropriate domain. Participation in distributed CRM system **400** should provide an enterprise with reduced support costs, and scalable and maintainable CRM content.

Customers also benefit from this support alliance configuration of a distributed CRM system **400**. The customer obtains personalization, since the affinity enterprise, at least in certain circumstances, will have specific useful information about the customer's deployment and use of a particular product, and can formulate appropriate session context to better guide the user session as it passes to other enterprises. The customer enjoys a seamless, comprehensive, and consistent interaction environment, which provides a better user experience. Moreover, dialog is available to assist the customer in navigating to the appropriate content.

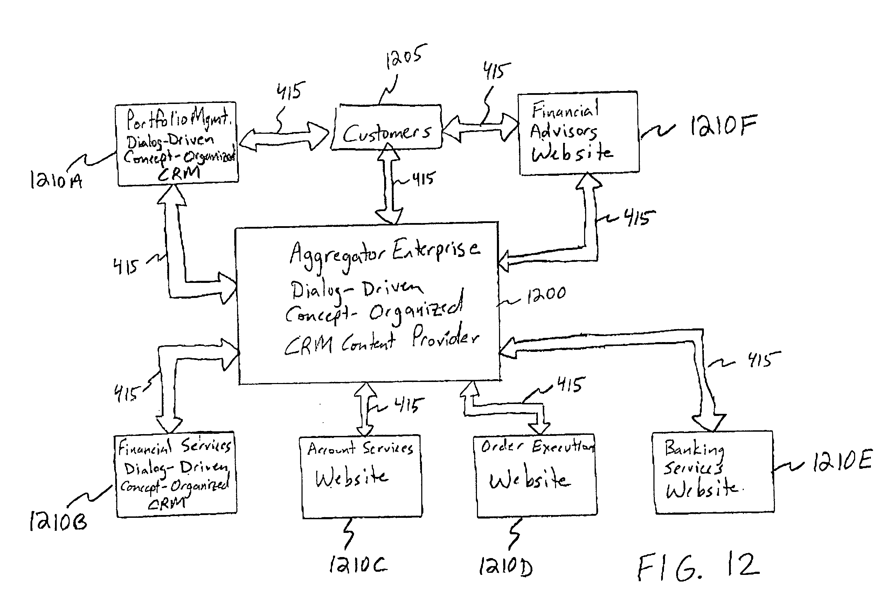

Figure **12** is a block diagram illustrating generally one example of a distributed CRM system **400** organized as an aggregation of products provided through an aggregator enterprise (e.g., e-Trade) hosting a dialog-driven concept-organized content provider **1200**. In an aggregation, several participants provide a suite of products for customers in a particular business domain (e.g., financial services). In this example, e-Trade aggregates financial experts, financial news and information, and banking services to facilitate various aspects of online trading and other online finance. Investment research, business news and data services, news feeds, mutual fund selection services, financial advice, financial instrument purchases, and trades are all accessible from the e-Trade CRM content provider **1200**.

In this example, dialog-driven concept-organized CRM content provider **1200** engages customer **1205** in a dialog to guide customer **1205** to various products available through other enterprises' content providers **1210A-F**, some of which may, but need not, be dialog-driven concept-organized CRM content providers. In one example, the aggregator's branding is retained throughout the customer's interaction with these other content providers. In one example, autocontextualization, described above to classify documents to concept nodes, is similarly used to classify information obtained from news feeds or other dynamically changing services to concept nodes. This assists in steering the customer to such content. Moreover, the nonaggregator enterprises can also leverage the content at the aggregator enterprise's CRM content provider **1200**, including the products offered by other participating nonaggregator enterprises. In one example, the aggregator enterprise's CRM content provider **1200** calls the nonaggregator enterprises content providers **1210A-F** to obtain relevant services to carry out the various parts of the overall customer transaction.

In this example, the nonaggregator enterprises benefit in several ways. By way of example, but not by way of limitation, they obtain access and visibility to a large range of customers and other participants without having to build such infrastructure. They are able to receive well-structured service requests without changing their internal applications. They are able to position their product at the appropriate point in the dialog between the customer **1205** and another participating enterprise. They are able to affiliate with a wide range of institutions and services, thereby enhancing value and branding of each participant's offerings. Participation in distributed CRM system **400** should provide an enterprise with reduced support costs, and scalable and maintainable CRM content.

In this example, the aggregator (e.g., e-Trade) also benefits in several ways. By way of example, but not by way of limitation, the aggregator retains control of information (especially customer information that participants may not which to share with other participants in the distributed CRM system **400**. The aggregator is able to direct the customer to featured product offerings, as opposed to competitive offerings at the nonaggregator enterprises or at other nonparticipating enterprises. The aggregator derives information from the customer interaction that would not have been available had the customer interacted directly with the nonaggregator enterprise. The aggregator benefits from scalability, which allows it to extend to many supporting nonaggregator enterprises quickly and inexpensively. The aggregator can provide new customers for content providers (e.g., news feeds, research analysis, etc.) that conventional syndication techniques do not reach. The aggregator can personalize the user interface for each particular customer.

In this example, the customer also benefits in several ways. By way of example, but not by way of limitation, the customer gains a better e-Trade experience, both in terms of its personalization (e.g., via dialog) and via its more powerful access to a wider range of products. The customer obtains a seamless, comprehensive, and consistent interaction environment. Moreover, dialog helps the customer to navigate to the desired products at the various enterprises.

Although many of the above examples of distributed CRM have been discussed with respect to different participating business enterprises, distributed CRM system **400** also provides benefits within a single enterprise. In one example, distributed CRM system **400** is implemented as a cross-domain organizational integrator that stitches together the customer experience across an organization.

Each business enterprise typically has a range of domains, each with specific interactions, attributes and services that comprise the customer experience for that area of the business. There are many domains that can be identified throughout the lifecycle of a customer external to the enterprise or within the enterprise. Such domains may have a specific business focus, customer interaction needs, and service capabilities (e.g., marketing, pre-sales, sales, services, support). Bridging the gaps and inconsistencies between these domains to provide a clear and substantially continuous customer relationship is a major challenge facing businesses today. In many respects, these domains conventionally act like separate businesses, with their own divisions of employees, information systems, and customer interaction processes. It is not uncommon for dozens, even hundreds, of unique websites to exist across an entire business enterprise, encompassing specific domain information for each product, at each stage of the product lifecycle. Distributed CRM system **400**, in one example, integrates across domains within a business enterprise. This simplifies and streamlines the customer experience as customers move through the product lifecycle. Any of the above-discussed distributed CRM topologies may also serve to integrate domains within a business enterprise. The selection of the appropriate configuration may depend on, among other things, the degree of integration needed between different areas of the business enterprise.

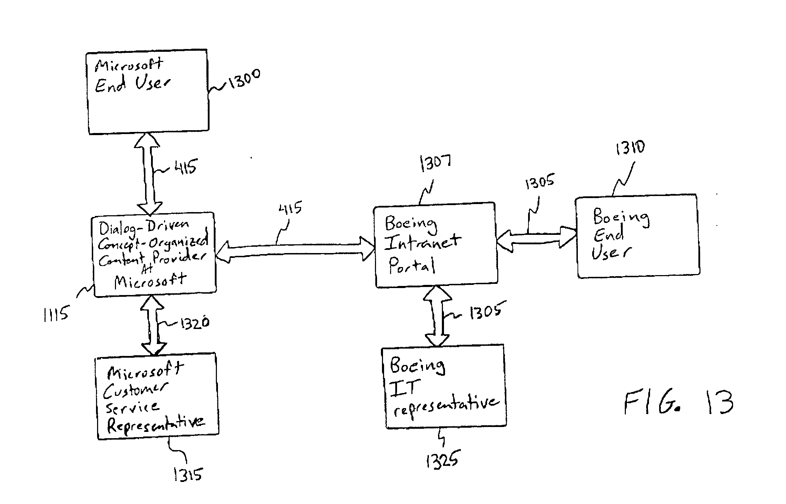

Figure **13** is a block diagram illustrating generally one example of a distributed CRM system **400** organized as a value chain. In this illustrative example, the support alliance is centered around two enterprises: Microsoft Corp. ("Microsoft") and Boeing Co. ("Boeing"), related primarily by Microsoft providing software used by employees of its customer, Boeing, who are supported by Microsoft customer support and Boeing information technology (IT) support staff. In the example of Figure **13**, Microsoft hosts an Internet-connected dialog-driven concept-organized CRM content provider **1115**, which is accessed over the Internet **415** directly by at least one Microsoft end-user **1300**, and indirectly (via the Boeing enterprise's intranet **1305** and Boeing intranet portal **1307**) by at least one Boeing end-user **1310**. In Figure **13**, a Microsoft customer service representative **1315** also accesses content provider **1115**, such as via the Microsoft enterprise's intranet **1320**, and a Boeing IT representative **1325** accesses content provider **1115** indirectly, via the Boeing intranet portal **1307**.

In Figure **13**, the Boeing end-user **1310** has access to the Microsoft content provider **1115** through the Boeing intranet portal **1307.** Among other things, this allows Microsoft/Boeing co-branding of content provided to the Boeing end-user **1310**. Examples of such content include, among other things, a document, a link into an online user community, or a link to Microsoft customer service representative **1315**. Because all Boeing end users **1310** access the Microsoft CRM content provider through an identifiable focal point (e.g., Boeing intranet portal **1307**), the session context identifies the Boeing end-user as being associated with Boeing and, if desired, as being associated with a particular unit within the Boeing enterprise. In one example, this information can be used to constrain the user's search to content about those Microsoft products actually used by Boeing. This will more efficiently guide the Boeing end-user **1310** to relevant information, e.g., as compared to direct access by the Microsoft end-user **1300.**

In another example, Microsoft advantageously obtains customer-segmented reporting and analytics on use of its content provider **1115**, such that Microsoft can differentiate between Boeing end-users **1310** and other Microsoft end-users **1300**. Examples of reporting and analytics are described in in commonly assigned Kay et al. U.S. Patent Application Serial No. 09/911,839 entitled, "SYSTEM AND METHOD FOR MEASURING THE QUALITY OF INFORMATION RETRIEVAL," filed on July 23, 2001, which is incorporated by reference herein in its entirety, including its description of providing reporting and analytics. Using such customer-specific information, which may be collected periodically (e.g., in weekly increments), either Microsoft or Boeing can alter the services provided to Boeing end-users **1310**, for example, providing training to Boeing end-users **1310** that emphasizes frequently encountered questions or problems from the Boeing end-user population. Because, in one example, Boeing intranet portal provides user attributes that identify a particular subgroup of Boeing end-users to which a particular user belongs, the reporting/analytics can be even more narrowly tailored to particular groups or units within the Boeing enterprise. From such reporting/analytics, Boeing can ascertain what its employees are doing on the Microsoft automated CRM content provider **1115** and how particular groups of employees are using Microsoft support services. Furthermore, Microsoft can also aggregate its customer-specific information together with information from similar customers (e.g., aggregate Boeing information with information from Microsoft's other aircraft manufacturers) to provide combined reporting/analytics across market segments.

In a further example, the Boeing intranet portal **1307** also includes functionality beyond serving as an identifiable focal point for Boeing end-users. In one example, Boeing intranet portal **1307** also includes an enterprise home web page (e.g., branded as the Boeing IT help desk). In this example, Microsoft content provider **1115** includes the ability to push information, articles, downloads of interest, etc., directly to the Boeing IT support staff or to Boeing end-users **1310**. In one example, the particular content pushed to the Boeing IT home web page of Boeing intranet portal **1307** is based at least in part on reporting/analytics of how Boeing end-users used the Microsoft content provider **1115**. For example, if such reporting/analytics indicates that the Boeing population is having a particular problem using Microsoft OUTLOOK®, then Microsoft content provider **1115** pushes content addressing the problem to the Boeing IT home web page of Boeing intranet portal **1307**, e.g., as a previously asked question (PQ). In another example, instead of pushing the content itself to the Boeing IT home web page of Boeing intranet portal **1307**, specific content at Microsoft content provider **1115** is bookmarked by providing a descriptive link of such content to the Boeing IT home web page of Boeing intranet portal **1307** for display to the Boeing end-users **1310.** In one example, access to the Microsoft content provider **1115** is provided as a ".NET" XML Web Services application integrated into an existing or specifically created Boeing IT intranet home web page of Boeing intranet portal **1307**, either alone, or in combination with other XML Web Services applications providing access to other similar content providers, which may be associated with an enterprise other than Microsoft.

In one example, the Microsoft automated CRM content provider **1115** includes an on-screen button or other mechanism by which a user can escalate their automated CRM user interaction session to an interaction session with a human customer service representative. In one example, when the Microsoft automated CRM content provider **1115** escalates a user interaction session of Boeing end user **1310** to a human Microsoft customer service representative **1315**, the escalation includes automatically opening a service incident report (SIR) in CLARIFY® or other CRM software used by the Microsoft call center. The Microsoft automated CRM content provider **1115** prepopulates the SIR with session context information obtained thus far from the user interaction session and, in a further example, with information obtained from other users, such as in the Boeing user population. Examples of information automatically entered into the SIR include, by way of example, but not by way of limitation, the user's query text, user-provider dialog questions and/or answers, and taxonomy nodes that are confirmed as being relevant to the user's needs. In one example, such session context information is automatically entered into the SIR using a look-up table or other mapping to an enumerated value list used by CLARIFY®. In another example, such session context information is presented in the SIR as descriptive text that can be read by the customer service representative. In yet another example, escalation is not required to create a Microsoft call center SIR. Using the above-discussed techniques, a call-center SIR is similarly created from a session context log even for a completely automated user-provider CRM session. In a further example, upon escalation of the automated session to a session involving human customer service representative, the Microsoft automated CRM content provider **1115** e-mails (or otherwise provides) a URL link to view the newly created SIR online. In yet a further example, upon completion of the escalated session with the Microsoft customer service representative **1315**, information from the Microsoft call center SIR is communicated back to the Microsoft automated CRM content provider **1115**, such as for being stored in a query log so that, in this example, reporting/analytics is based not only on automated session context, but also on the user's interaction with Microsoft's human customer service representative.

In another example, instead of (or in addition to) allowing the Boeing end-user **1310** to escalate to a human Microsoft customer service representative **1315**, as discussed above, an escalation to a human Boeing IT representative **1325** is available. In one example, this escalation includes automatically opening a service incident report (SIR) in CLARIFY® or other CRM software used by the Boeing IT help desk call center. The Microsoft automated CRM content provider **1115** prepopulates the SIR with session context information obtained thus far from the user interaction session, such as discussed above. In one example, if the Boeing IT representative **1325** is unable to provide the user with the needed information or assistance, the session is then escalated to a human Microsoft customer service representative **1315**, as discussed above, additionally passing to Microsoft any SIR information about the Boeing end-user's **1310** interaction with the Boeing IT representative **1325**.

In a further example, the Boeing IT home web page of Boeing intranet portal **1307** includes locally hosted content tagged to concept node(s) in the Microsoft knowledge map used by Microsoft's content provider **1115**. In this example, Microsoft publishes to Boeing all or portions of the Microsoft knowledge map, including addressing identifiers for the concept nodes. Boeing personnel can then create local Boeing documents or other content. Such a Boeing document is then stored as a client-side previously-asked-question (PQ) tagged to one or more Microsoft concept nodes. In one example, Boeing occasionally or periodically publishes such tagging information to Microsoft for inclusion in the Microsoft knowledge map. In another example, such information about tagging of local Boeing content to Microsoft concept node(s) is instead passed from Boeing intranet portal **1307** to Microsoft content provider **1115** as part of the session context developed during a user-provider interaction session.

### Conclusion

In the above discussion and in the attached appendices, the term "computer" is defined to include any digital or analog data processing unit. Examples include any personal computer, workstation, set top box, mainframe, server, supercomputer, laptop or personal digital assistant capable of embodying the inventions described herein. Examples of articles comprising computer readable media are floppy disks, hard drives, CD-ROM or DVD media or any other read-write or read-only memory device. The particular real-world enterprises and real-world products named above are provided merely as illustrative examples to better explain how distributed CRM is used in a real-world context. Moreover, although certain examples are discussed above in terms of different enterprises, it is understood that these examples are also applicable to different entities within the same enterprise.

It is to be understood that the above description is intended to be illustrative, and not restrictive. For example, the above-described embodiments may be used in combination with each other. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

Further, the computer programs for carrying out the above methods can be obtained in electronic form for example by downloading the code over a network such as the internet. Thus in accordance with another aspect of the present invention there is provided an electrical signal carrying processor implementable instructions for controlling a processor to carry out a method as hereinbefore described.

## Claims

**1.** A computer-assisted method of operating a content provider in a customer relationship management (CRM) system, the method including:
mapping first content to concept nodes of an automated CRM first content provider hosted by a first entity;
initiating a user session with the first content provider;
receiving from the user a user query pertaining to the user's needs;
carrying out a user-provider dialog between the user and the first content provider to confirm that a concept node is likely relevant to the user's needs, the confirmed concept node including a calling link to a second content provider hosted by a second entity, different from the first entity, and the second content provider including second content managed substantially independently from the first content of the first content provider; and
calling the second content provider to retrieve that portion of the second content, if any, that is deemed likely relevant to the user's needs.

**2.** The method of claim **1**, in which the first and second entities are respective different first and second business enterprises.

**3.** The method of claim **1**, in which the mapping first content to concept nodes includes autocontextualizing documents to the concept nodes.

**4.** The method of claim **1**, in which the mapping first content to concept nodes includes mapping first content to concept nodes organized in multiple different taxonomies.

**5.** The method of claim **4**, in which the mapping first content to concept nodes includes mapping first content to concept nodes organized in multiple different taxonomies, each taxonomy including a directed acyclical graph (DAG).

**6.** The method of claim **1**, in which initiating a user session with the first content provider includes receiving a web site visit from the user.

**7.** The method of claim **1**, further including mapping second content to concept nodes of the second content provider hosted by the second entity.

**8.** The method of claim **7**, in which the mapping second content includes autocontextualizing second content to concept nodes of the second content provider hosted by the second entity.

**9.** The method of claim **1,** further including carrying out a user-provider dialog between the user and the second content provider to confirm that a concept node of the second content provider is likely relevant to the user query.

**10.** The method of claim **9,** further including returning content, which is likely relevant to the user query, from the second content provider to at least one of the first content provider and the user.

**11.** The method of claim **1**, in which calling the second content provider includes calling at least one of:
a dialog-driven concept-organized second content provider;
a web site second content provider;
a web service second content provider;
a search engine second content provider;
a discussion thread second content provider; and
an interface for interacting with a customer service representative.

**12.** A computer-readable medium including instructions for carrying out the method of at least one of claims **1** to **11**.

**13.** A computer-assisted method of operating a content provider in a customer relationship management (CRM) system, the method including:
initiating a user session with a first content provider associated with a first entity;
calling a concept-organized second content provider hosted by a second entity, different from the first entity, and including second content managed substantially independently from any first content of the first entity;
carrying out a user-provider session between the user and the second content provider; and
returning, to the user, content from the second content provider that is deemed likely relevant to the user's needs.

**14.** The method of claim **13**, further including returning, to the user, content from the first content provider that is deemed likely relevant to the user's needs.

**15.** The method of claim **14**, further including integrating the content from the first content provider with the content from the second content provider for returning integrated content to the user.

**16.** The method of claim **13**, further including reporting to the first entity information about the first entity's usage of the second content provider.

**17.** The method of claim **16**, further including reporting to the first entity benchmarking information about other entities', which are different from the first entity, usage of the second content provider.

**18.** The method of claim **13**, in which the carrying out the user-provider session between the user and the second content provider includes basing the session at least in part on at least one attribute associated with the first entity.

**19.** The method of claim **18**, in which the basing the session at least in part on at least one attribute associated with the first entity includes accessing only a portion of the second content that is defined by the attribute as being relevant to the first entity.

**20.** The method of claim **13**, in which the first and second entities are respective different first and second business enterprises.

**21.** The method of claim **13**, further including mapping second content to concept nodes associated with the second content provider.

**22.** The method of claim **21**, in which the mapping includes autocontextualizing documents to the concept nodes associated with the second content provider.

**23.** The method of claim **21**, in which the mapping includes mapping second content to concept nodes, associated with the second content provider, that are organized in multiple different taxonomies.

**24.** The method of claim **21**, in which the mapping includes mapping second content to concept nodes, associated with the second content provider, that are organized in multiple different taxonomies, each taxonomy including a directed acyclical graph (DAG).

**25.** The method of claim **13**, in which initiating a user session with the first entity includes receiving a web site visit from the user.

**26.** The method of claim **13**, in which initiating a user session with the first entity includes receiving a telephone call from the user.

**27.** A computer-readable medium including instructions for carrying out the method of at least one of claims **13** to **26**.

**28.** A first content provider, including:
a user interface to receive a user query pertaining to the user's needs;
first concept nodes and first content mapped to the first concept nodes; and
a communication interface to communicate with a second content provider of second content that is managed substantially independently from the first content, the communication interface including a calling link, to the second content provider, the calling link associated with at least one exit node of the first concept nodes.

**29.** The first content provider of claim **28,** in which the communication interface includes at least one entry node of the first concept nodes, the entry node configured for being called by the second content provider.

**30.** The first content provider of claim **28**, further including an autocontextualization engine to map the first content to the first concept nodes.

**31.** The first content provider of claim **28**, further including a dialog engine configured to carry on a dialog with the user to focus a search for first content pertaining to the user's needs to a particular subset of the first concept nodes.

**32.** The first content provider of claim **28**, in which the first concept nodes are organized into a first knowledge map of multiple different taxonomies.

**33.** The first content provider of claim **32**, in which the multiple different taxonomies include directed acyclical graphs (DAGs).

**34.** The first content provider of claim **28,** in which the calling link is configured to connect over a network to a dialog-driven concept-organized second content provider.

**35.** The first content provider of claim **28,** in which the calling link is configured to connect over a network to content of a web site of the second content provider.

**36.** The first content provider of claim **28,** in which the calling link is configured to connect over a network to a service of a web site of the second content provider.

**37.** The first content provider of claim **28,** in which the calling link is configured to connect over a network to a text search engine of the second content provider.

**38.** The first content provider of claim **28,** in which the calling link is configured to connect over a network to a discussion thread of the second content provider.

**39.** The first content provider of claim **28**, in which the calling link is configured to connect over a network to an interface for interacting with a customer service representative.

**40.** The first content provider of claim **28**, in which the first and second content providers are respectively associated with different first and second entities.

**41.** The first content provider of claim **40,** in which the first and second entities are respective different first and second business enterprises.

**42.** A customer relationship management (CRM) content provider system including:
first and second content providers, the first content provider including:
a user interface to receive a user query pertaining to the user's needs;
a first knowledge map including first concept nodes and first content mapped to the first concept nodes;
a first dialog engine coupled to the user interface and the first knowledge map, to carry out a dialog with the user to restrict a search for content pertaining to the user's needs to at least one particular subset of the first concept nodes;
a first communication interface to communicate with the second content provider, the first communication interface including at least one exit first concept node that calls the second content provider;
and the second content provider including:
a second communication interface to communicate with the first content provider, the second communication interface including at least one entry second concept node configured for being called by the first content provider;
a second knowledge map including second concept nodes and second content mapped to the second concept nodes; and
a second dialog engine coupled to the user interface and the first knowledge map, to carry out a dialog with the user to restrict a search for content pertaining to the user's needs to at least one particular subset of the second concept nodes.

**43.** The system of claim **42**, in which the first content provider includes a first autocontextualization engine to map the first content to the first concept nodes, and in which the second content provider includes a second autocontextualization engine to map the second content to the second concept nodes.

**44.** The system of claim **42**, in which the first concept nodes are organized into multiple different first taxonomies, and the second concept nodes are organized into multiple different second taxonomies.

**45.** The system of claim **42**, in which at least one of the taxonomies includes a directed acyclical graph.

**46.** A computer-assisted method of operating a content provider in a customer relationship management (CRM) system, the method including:
mapping first content to first concept nodes of an automated CRM first content provider hosted by a first entity;
initiating a user session with the first content provider;
receiving from the user a user query pertaining to the user's needs;
carrying out a user-provider dialog between the user and the first content provider to determine which concept nodes pertain to the user's needs; and
escalating the user session to an interface for interacting with a human customer service representative associated with a second entity, different from the first entity.

**47.** The method of claim **46,** in which the first and second entities are respective different first and second business enterprises.

**48.** A computer-readable medium including instructions for carrying out the method of at least one of claims **46** to **47.**

**49.** A computer-assisted method of operating a content provider in a customer relationship management (CRM) system, the method including:
mapping second content to second concept nodes of an automated CRM second content provider hosted by a second entity;
receiving from a user, at a telephonic interface for interacting with a human customer service representative associated with a first entity, a telephone user query pertaining to the user's needs;
initiating a user session with the second content provider using a subset of the second concept nodes determined based on the user's session with the interface for interacting with the customer service representative; and
carrying out a user-provider dialog between the user and the second content provider to further guide the user to a portion of the second content that is deemed likely relevant to the user's needs.

**50.** The method of claim **49**, in which the first and second entities are respective different first and second business enterprises.

**51.** A computer-readable medium including instructions for carrying out the method of at least one of claims **49** to **50.**

**52.** A computer-assisted method of operating a content provider in a customer relationship management (CRM) system, the method including:
mapping, to first concept nodes of an automated concept-organized CRM first content provider hosted by a first entity, first content hosted by the first content provider;
initiating a user session with the first content provider via a portal hosted by a second entity that is different from the first entity;
receiving at the portal, over an intranet hosted by the second entity, a user query pertaining to the user's needs, and communicating the user query to the first content provider along with session context identifying the user as being associated with the second entity;
carrying out a user-provider session between the user and the first content provider to determine whether any first concept node is likely relevant to the user's needs; and
returning to the user an indication of first content associated with a first concept node deemed relevant to the user's needs.

**53.** The method of claim **52**, further including escalating, if an escalation request is received from the user, the user session to an interface for interacting with a human customer service representative.

**54.** The method of claim **52**, in which escalating the user session is to an interface for interacting with a human customer service representative associated with the first entity.

**55.** The method of claim **52**, in which escalating the user session is to an interface for interacting with a human customer service representative associated with the second entity.

**56.** The method of claim **52,** in which escalating includes initiating a service incident report (SIR).

**57.** The method of claim **56**, further including transferring to the SIR information obtained from session context from the user session.

**58.** The method of claim **56,** further including communicating to the user a web link to view the SIR.

**59.** The method of claim **52**, further including providing an indication of content at the portal based at least in part on previous user sessions of users associated with the second entity.

**60.** The method of claim **52,** further including mapping, to first concept nodes of an automated concept-organized CRM first content provider hosted by a first entity, second content hosted by the portal associated with the second entity.

**61.** The method of claim **52**, further including returning to the user an indication of second content associated with a first concept node deemed relevant to the user's needs.

**63.** A computer-readable medium including instructions for carrying out the method of at least one of claims **52** to **61.**

**64.** An electrical signal carrying processor implementable instructions for controlling a processor to carry out the method of any one of claims 1 to 11, 13 to 26, 46 and 47, 49 and 50, and 52 to 61.
